(19) **Europäisches Patentamt / European Patent Office / Office européen des brevets**

(11) **EP 4 487 948 A1**

(12) **EUROPEAN PATENT APPLICATION**
published in accordance with Art. 153(4) EPC

(43) Date of publication:
**08.01.2025 Bulletin 2025/02**

(21) Application number: **22929898.9**

(22) Date of filing: **09.06.2022**

(51) International Patent Classification (IPC):
**B01J 23/42** (2006.01)    **B01J 23/89** (2006.01)
**H01M 4/92** (2006.01)    **H01M 4/96** (2006.01)
**H01M 8/10** (2016.01)

(52) Cooperative Patent Classification (CPC):
**B01J 23/42; B01J 23/89; B01J 27/24; C01B 32/05;
C01B 32/205; C25B 11/031; C25B 11/054;
C25B 11/065; C25B 11/081; H01M 4/86;
H01M 4/90; H01M 4/92; H01M 4/96; H01M 8/10;
H01M 12/06;**    (Cont.)

(86) International application number:
**PCT/JP2022/023285**

(87) International publication number:
**WO 2023/166754 (07.09.2023 Gazette 2023/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.03.2022 JP 2022033944**

(71) Applicant: **Nisshinbo Holdings Inc.**
**Tokyo 103-8650 (JP)**

(72) Inventors:
• **KATAGIRI, Noriaki**
**Chiba-shi, Chiba 267-0056 (JP)**
• **ISHIZUKA, Takuya**
**Chiba-shi, Chiba 267-0056 (JP)**
• **KOBAYASHI, Yoshikazu**
**Chiba-shi, Chiba 267-0056 (JP)**
• **KISHIMOTO, Takeaki**
**Chiba-shi, Chiba 267-0056 (JP)**
• **SATO, Tetsutaro**
**Chiba-shi, Chiba 267-0056 (JP)**

(74) Representative: **Vossius & Partner
Patentanwälte Rechtsanwälte mbB
Siebertstrasse 3
81675 München (DE)**

(54) **METAL-LOADED CATALYST, ELECTRODE AND BATTERY**

(57) Provided are a metal-supported catalyst having both excellent durability and an excellent catalytic function, an electrode, and a battery. The metal-supported catalyst is a metal-supported catalyst, including: a carbon carrier; and catalyst metal particles supported on the carbon carrier, the particles each containing a noble metal, wherein the metal-supported catalyst has a half width at half maximum of a D band having a peak top in a vicinity of a Raman shift of 1,340 cm$^{-1}$ of 50.0 cm$^{-1}$ or less in a Raman spectrum obtained by Raman spectroscopy, and wherein the metal-supported catalyst has a carbon anchoring proportion of 15.0% or more.

EP 4 487 948 A1

(52) Cooperative Patent Classification (CPC): (Cont.)
Y02E 60/50

**Description**

Technical Field

The present invention relates to a metal-supported catalyst, an electrode, and a battery.

Background Art

In Patent Literature 1, there is described a catalyst including a support having fine pores and catalyst particles, in which the support contains carbon, and at least part of the catalyst particles is buried in the support.

In Patent Literature 2, there is described a catalyst including a catalyst carrier and a catalyst metal supported on the catalyst carrier, in which a BET specific surface area per weight of the carrier is more than 1,200 $m^2$/g-carrier, and an acid group amount per weight of the carrier is 0.7 mmol/g-carrier or more.

In Patent Literature 3, there is described an electrode catalyst including catalyst particles and a carbon film for coating surfaces of the catalyst particles, in which the catalyst particles each have a chloride ion content per unit surface area of less than 12.5 $\mu$g/$m^2$.

Citation List

Patent Literature

[PTL 1] JP 2008-207072 A
[PTL 2] WO 2014/175099 A1
[PTL 3] JP 2020-136109 A

Summary of Invention

Technical Problem

However, it has hitherto been difficult to achieve a metal-supported catalyst having both excellent durability and excellent catalytic function.

The present invention has been made in view of the above-mentioned problem, and one of the objects of the present invention is to provide a metal-supported catalyst having both excellent durability and excellent catalytic function, an electrode, and a battery.

Solution to Problem

In order to achieve the above-mentioned object, according to one embodiment of the present invention, there is provided a metal-supported catalyst, including: a carbon carrier; and catalyst metal particles supported on the carbon carrier, the particles each containing a noble metal, wherein the metal-supported catalyst has a half width at half maximum of a D band having a peak top in a vicinity of a Raman shift of 1,340 $cm^{-1}$ of 50.0 $cm^{-1}$ or less in a Raman spectrum obtained by Raman spectroscopy, and wherein the metal-supported catalyst has a carbon anchoring proportion calculated by the following equation (I) of 15.0% or more:

$$\text{Carbon anchoring proportion (\%)} = (1 - \text{electrochemically effective specific surface area} / \text{geometric specific surface area}) \times 100 \quad \text{(I)}$$

in the equation (I), the "electrochemically effective specific surface area" and the "geometric specific surface area" are an electrochemically effective specific surface area ($m^2$/g-noble metal) and a geometric specific surface area ($m^2$/g-noble metal) of the noble metal contained in the metal-supported catalyst, respectively. According to the embodiment of the present invention, a metal-supported catalyst having both excellent durability and excellent catalytic function is provided.

The metal-supported catalyst may have an average pore diameter of 8.0 nm or less. The metal-supported catalyst may have a ratio of a volume ($cm^3$/g-carbon carrier) of pores each having a pore diameter of less than 5 nm to a volume ($cm^3$/g-carbon carrier) of pores each having a pore diameter of 5 nm or more and 70 nm or less of 1.5 or more. The metal-supported catalyst may have a BET specific surface area of 350 ($m^2$/g-carbon carrier) or more.

In the metal-supported catalyst, a proportion of a weight of the noble metal to a weight of the metal-supported catalyst may be 30 wt% or more. The metal-supported catalyst may have the electrochemically effective specific surface area of the noble metal contained in the metal-supported catalyst of 45 (m$^2$/g-noble metal) or more. The metal-supported catalyst may have the geometric specific surface area of the noble metal contained in the metal-supported catalyst of 52 (m$^2$/g-noble metal) or more.

The metal-supported catalyst may have a carbon anchoring amount calculated by the following equation (II) of 5.0 m$^2$/g or more:

$$\text{Carbon anchoring amount (m}^2\text{/g)} = \{\text{noble metal content (wt\%)}/100\} \times (\text{geometric specific surface area -electrochemically effective specific surface area}) \tag{II}$$

in the equation (II), the "noble metal content (wt%)" is a proportion of a weight of the noble metal to a weight of the metal-supported catalyst, and the "geometric specific surface area" and the "electrochemically effective specific surface area" are a geometric specific surface area (m$^2$/g-noble metal) and an electrochemically effective specific surface area (m$^2$/g-noble metal) of the noble metal contained in the metal-supported catalyst, respectively.

The metal-supported catalyst may have a durability index calculated by the following equation (III) of 0.50 cm or more:

$$\text{Durability index (cm)} = \text{carbon anchoring proportion (\%)} \times (1/\text{Raman D half width at half maximum}) \tag{III}$$

in the equation (III), the "carbon anchoring proportion (%)" is calculated by the equation (I), and the "Raman D half width at half maximum" is the half width at half maximum (cm$^{-1}$) of the D band.

In order to achieve the above-mentioned object, according to one embodiment of the present invention, there is provided an electrode, including any one of the metal-supported catalysts described above. According to the embodiment of the present invention, an electrode having excellent characteristics is provided.

In order to achieve the above-mentioned object, according to one embodiment of the present invention, there is provided a battery, including the electrode described above. According to the embodiment of the present invention, a battery having excellent characteristics is provided.

Advantageous Effects of Invention

According to the present invention, a metal-supported catalyst having both excellent durability and excellent catalytic function, an electrode, and a battery are provided.

Brief Description of Drawings

FIG. 1 is an explanatory figure showing an example of an analysis result of a Raman spectrum obtained by Raman spectroscopy of a metal-supported catalyst in Example according to an embodiment of the present invention.

FIG. 2A is an explanatory figure showing an example of an analysis result of an X-ray diffraction pattern obtained by powder X-ray diffraction of the metal-supported catalyst in Example according to an embodiment of the present invention.

FIG. 2B is an explanatory figure showing another example of an analysis result of the X-ray diffraction pattern obtained by powder X-ray diffraction of the metal-supported catalyst in Example according to an embodiment of the present invention.

FIG. 3 is an explanatory figure showing an example of an analysis result of an X-ray diffraction pattern obtained by powder X-ray diffraction of a metal-supported catalyst in Example according to an embodiment of the present invention.

FIG. 4A is an explanatory figure showing production conditions of a metal-supported catalyst and evaluation results of the characteristics of a fuel cell including the metal-supported catalyst in Example according to an embodiment of the present invention.

FIG. 4B is an explanatory figure showing evaluation results of the characteristics of the metal-supported catalyst in Example according to an embodiment of the present invention.

Description of Embodiments

One of the embodiments of the present invention will be described below. The present invention is not limited to examples described in the embodiment.

EP 4 487 948 A1

A metal-supported catalyst according to an embodiment of the present invention (hereinafter referred to as "catalyst of the present invention") includes a carbon carrier and catalyst metal particles supported on the carbon carrier, the particles each containing a noble metal.

A carbon carrier in the catalyst of the present invention is a carbon material mainly including carbon. The carbon content of the carbon carrier may be, for example, 70 wt% or more, and is preferably 75 wt% or more, more preferably 80 wt% or more, and particularly preferably 85 wt% or more.

The carbon content of the carbon carrier may be, for example, 100 wt% or less, 95 wt% or less, or 90 wt% or less. The carbon content of the carbon carrier may be specified by arbitrarily combining any one of the above-mentioned lower limit values and any one of the above-mentioned upper limit values. The carbon content of the carbon carrier is obtained by elemental analysis (combustion method).

The carbon carrier is preferably a carbonized material. The carbonized material is obtained by carbonizing a raw material containing an organic substance. The content of the organic substance in the raw material for carbonization may be, for example, 5 wt% or more and 90 wt% or less, and is preferably 10 wt% or more and 80 wt% or less.

The organic substance contained in the raw material is not particularly limited as long as the organic substance can be carbonized. An organic compound contained in the organic substance may be a polymer (e.g., a thermosetting resin and/or a thermoplastic resin), and/or may be an organic compound having a smaller molecular weight.

The carbon carrier preferably contains nitrogen. That is, the carbon carrier preferably contains a nitrogen atom in its carbon structure. The carbon carrier containing nitrogen is preferably a carbonized material containing nitrogen. The carbonized material containing nitrogen is obtained by, for example, carbonizing a raw material containing a nitrogen-containing organic substance. The nitrogen-containing organic substance preferably contains a nitrogen-containing organic compound. The nitrogen-containing organic compound is not particularly limited as long as the organic compound contains a nitrogen atom in its molecule. The nitrogen contained in the carbon carrier may be nitrogen introduced by nitrogen doping treatment.

The nitrogen content of the carbon carrier may be, for example, 0.10 wt% or more, and is preferably 0.15 wt% or more, more preferably 0.20 wt% or more, still more preferably 0.25 wt% or more, and particularly preferably 0.30 wt% or more. The nitrogen content of the carbon carrier may be, for example, 10.00 wt% or less. The nitrogen content of the carbon carrier is obtained by subjecting the carbon carrier to elemental analysis (combustion method).

The carbon carrier is preferably a carbonized material obtained by carbonizing a raw material containing an organic substance and a metal. In this case, the carbon carrier may be a carbonized material subjected to metal removal treatment after the carbonization. The metal removal treatment is treatment for reducing the amount of a raw material-derived metal contained in the carbonized material. Specifically, the metal removal treatment is preferably, for example, washing treatment with an acid and/or electrolytic treatment.

When the carbon carrier is a carbonized material obtained by carbonizing a raw material containing an organic substance and a metal, the carbon carrier may contain a metal derived from the raw material for carbonization (hereinafter referred to as "raw material metal"). In this case, the carbon carrier contains the raw material metal inside a skeleton forming a porous structure of the carbon carrier. Even when the carbon carrier is a carbonized material produced through metal removal treatment as described above, the raw material metal remains inside the skeleton of the carbon carrier. The weight of a raw material metal contained inside the skeleton of the carbon carrier, among the raw material metals contained in the carbon carrier, may be larger than the weight of a raw material metal contained in the surface of the skeleton of the carbon carrier.

The raw material metal inside the skeleton of the carbon carrier may be detected by, for example, subjecting the skeleton to surface etching treatment and analyzing a cross-section exposed by the etching treatment. That is, in this case, when one particle of the carbon carrier is subjected to etching treatment, the raw material metal is detected in a cross-section of the particle exposed by the etching treatment. The raw material metal contained in the carbon carrier may be detected by, for example, inductively coupled plasma atomic emission spectroscopy of the carbon carrier.

The raw material metal content of the carbon carrier (proportion of the weight of the raw material metal contained in the carbon carrier to the weight of the carbon carrier) may be, for example, 0.001 wt% or more, 0.005 wt% or more, 0.01 wt% or more, or 0.02 wt% or more. The raw material metal content of the carbon carrier may be, for example, 5 wt% or less, 4 wt% or less, 3 wt% or less, 2 wt% or less, 1 wt% or less, 0.8 wt% or less, or 0.5 wt% or less. The raw material metal content of the carbon carrier may be specified by arbitrarily combining any one of the above-mentioned lower limit values and any one of the above-mentioned upper limit values. The raw material metal content of the carbon carrier is obtained by, for example, inductively coupled plasma atomic emission spectroscopy of the carbon carrier.

The raw material metal is preferably a transition metal. That is, the raw material metal is preferably a transition metal belonging to Groups III to XII in the periodic table, and particularly preferably a transition metal belonging to the fourth period of Groups III to XII in the periodic table.

The raw material metal may be a transition metal other than platinum. The raw material metal may be a transition metal other than noble metals (e.g., ruthenium (Ru), palladium (Pd), rhodium (Rh), silver (Ag), osmium (Os), iridium (Ir), platinum (Pt), and gold (Au)).

Specifically, the raw material metal may be, for example, one or more selected from the group consisting of: scandium (Sc); titanium (Ti); vanadium (V); chromium (Cr); manganese (Mn); iron (Fe); cobalt (Co); nickel (Ni); copper (Cu); zinc (Zn); yttrium (Y); zirconium (Zr); niobium (Nb); molybdenum (Mo); ruthenium (Ru); rhodium (Rh); palladium (Pd); silver (Ag); lanthanoids (e.g., gadolinium (Gd)); and actinoids, and is preferably one or more selected from the group consisting of: Fe; Co; Ni; Cu; and Zn, more preferably one or more selected from the group consisting of: Fe; Co; Ni; and Zn, and particularly preferably one or more selected from the group consisting of: Co; Ni; and Zn.

The carbonization in the production of the carbonized material is performed by heating the raw material at a temperature at which the organic substance contained in the raw material is carbonized. The carbonizing temperature is not particularly limited as long as the raw material is carbonized at the temperature, and is, for example, preferably 1,200°C or more, more preferably 1,300°C or more, still more preferably 1,400°C or more, and particularly preferably 1,500°C or more.

The carbonizing temperature may be, for example, 3,000°C or less, and is preferably 2,500°C or less, and particularly preferably 2,000°C or less. The carbonizing temperature may be specified by arbitrarily combining any one of the above-mentioned lower limit values and any one of the above-mentioned upper limit values. A temperature increase rate up to the carbonizing temperature is not particularly limited, and may be, for example, 0.5°C/min or more and 300°C/min or less. The carbonization is preferably performed in an inert atmosphere such as a nitrogen atmosphere.

The carbonization may be performed under normal pressure (atmospheric pressure), but is preferably performed under pressure (under a pressure higher than atmospheric pressure). When the carbonization is performed under pressure, the pressure of the atmosphere for carbonization may be, for example, 0.05 MPa or more in terms of gauge pressure, and is preferably 0.15 MPa or more, more preferably 0.20 MPa or more, still more preferably 0.40 MPa or more, and particularly preferably 0.50 MPa or more in terms of gauge pressure. The upper limit value of the pressure of the atmosphere for carbonization is not particularly limited, but the pressure may be, for example, 10 MPa or less in terms of gauge pressure.

The carbon carrier is preferably a carbonized material subjected to graphitization treatment after carbonization. That is, the carbon carrier is preferably, for example, a carbonized material obtained by subjecting the carbonized material obtained by carbonizing the raw material containing the organic substance to graphitization treatment.

The graphitization treatment is performed by heating the carbonized material at a temperature at which graphitization proceeds. A heating temperature at which the carbonized material is heated in the graphitization treatment is not particularly limited as long as graphitization proceeds in the carbonized material at the temperature, but is preferably a temperature higher than the carbonizing temperature for obtaining the carbonized material.

Specifically, the heating temperature in the graphitization treatment may be, for example, 1,300°C or more, and is preferably 1,400°C or more, more preferably 1,500°C or more, still more preferably 1,600°C or more, still more preferably 1,700°C or more, still more preferably 1,750°C or more, and particularly preferably 1,800°C or more.

The heating temperature in the graphitization treatment may be, for example, 3,000°C or less, and is preferably 2,500°C or less, more preferably 2,400°C or less, still more preferably 2,300°C or less, still more preferably 2,250°C or less, still more preferably 2,200°C or less, still more preferably 2,150°C or less, and particularly preferably 2,100°C or less. The heating temperature in the graphitization treatment may be specified by arbitrarily combining any one of the above-mentioned lower limit values and any one of the above-mentioned upper limit values. A temperature increase rate up to the heating temperature in the graphitization treatment is not particularly limited, and may be, for example, 0.5°C/min or more and 300°C/min or less. The graphitization treatment is preferably performed in an inert atmosphere such as a nitrogen atmosphere.

When the carbon carrier is a carbonized material subjected to graphitization treatment after carbonization, the carbonized material after the graphitization treatment is preferably not to be subjected to pulverization treatment. That is, in the production of the carbon carrier, for example, the following procedure is preferred: the carbonized material obtained by carbonizing the raw material is subjected to pulverization treatment to adjust its median diameter; the carbonized material having been pulverized is then subjected to graphitization treatment; and the carbonized material after the graphitization treatment is not to be subjected to pulverization treatment.

The carbon carrier is preferably a carbon material exhibiting catalytic activity. That is, in this case, the carbon carrier is preferably a carbon catalyst that itself exhibits catalytic activity alone. The carbon carrier serving as a carbon catalyst is preferably a carbonized material obtained by carbonizing a raw material containing an organic substance and a metal as described above.

The catalytic activity to be exhibited by the carbon carrier is, for example, preferably reduction activity and/or oxidation activity, more preferably oxygen reduction activity and/or hydrogen oxidation activity, and particularly preferably at least oxygen reduction activity.

In the catalyst of the present invention, the catalyst metal particles supported on the carbon carrier each contain a noble metal. The catalyst metal particles each containing a noble metal each contain a noble metal not forming an alloy (hereinafter sometimes referred to as "pure noble metal") and/or a noble metal alloy. The noble metal alloy is an alloy of a noble metal and a metal other than the noble metal (hereinafter referred to as "non-noble metal"). That is, the noble metal alloy contains one or more noble metals and one or more non-noble metals.

The noble metal is preferably, for example, one or more selected from the group consisting of: ruthenium (Ru); palladium (Pd); rhodium (Rh); silver (Ag); osmium (Os); iridium (Ir); platinum (Pt); and gold (Au), more preferably one or more selected from the group consisting of: Ru; Pd; Rh; Ir; and Pt, and particularly preferably Pt.

That is, the catalyst metal particles each preferably contain platinum. The catalyst metal particles each containing platinum each contain platinum not forming an alloy (hereinafter sometimes referred to as "pure platinum") and/or a platinum alloy. The platinum alloy is an alloy of platinum and a non-noble metal. That is, the platinum alloy contains platinum and one or more non-noble metal. The platinum alloy may further contain one or more other noble metal, or may not contain any other noble metal.

The non-noble metal for forming the noble metal alloy is not particularly limited as long as the non-noble metal is a metal other than a noble metal, which forms an alloy with a noble metal, but is preferably a transition metal other than a noble metal. Specifically, the non-noble metal contained in the noble metal alloy is, for example, preferably one or more selected from the group consisting of: titanium (Ti); manganese (Mn); iron (Fe); cobalt (Co); nickel (Ni); copper (Cu); niobium (Nb); and cerium (Ce), more preferably one or more selected from the group consisting of: Fe; Co; and Ni, and particularly preferably one or more selected from the group consisting of: Co; and Ni.

When the carbon carrier is a carbonized material of a raw material containing an organic substance and a raw material metal, the catalyst metal particles supported on the carbon carrier may contain the same metal as the raw material metal, or may not contain the same metal as the raw material metal.

The catalytic activity of the catalyst metal particles is not particularly limited as long as the effects of the present invention are obtained, but for example, the catalyst metal particles preferably exhibit reduction activity and/or oxidation activity, more preferably exhibit oxygen reduction activity and/or hydrogen oxidation activity, and particularly preferably exhibit at least oxygen reduction activity.

The catalyst of the present invention preferably has a carbon structure exhibiting, in the Raman spectrum obtained by Raman spectroscopy, a half width at half maximum (hereinafter referred to as "Raman D half width at half maximum") of a D band having a peak top in the vicinity of a Raman shift of 1,340 cm$^{-1}$ (specifically, for example, in the range of 1,320 cm$^{-1}$ or more and 1,360 cm$^{-1}$ or less) of 50.0 (cm$^{-1}$) or less.

The Raman D half width at half maximum of the catalyst of the present invention is, for example, more preferably 48.0 cm$^{-1}$ or less, still more preferably 46.0 cm$^{-1}$ or less, still more preferably 44.0 cm$^{-1}$ or less, still more preferably 42.0 cm$^{-1}$ or less, still more preferably 40.0 cm$^{-1}$ or less, still more preferably 38.0 cm$^{-1}$ or less, still more preferably 36.0 cm$^{-1}$ or less, still more preferably 34.0 cm$^{-1}$ or less, still more preferably 32.0 cm$^{-1}$ or less, still more preferably 30.0 cm$^{-1}$ or less, still more preferably 28.0 cm$^{-1}$ or less, still more preferably 26.0 cm$^{-1}$ or less, and particularly preferably 25.0 cm$^{-1}$ or less.

The Raman D half width at half maximum of the carbon structure of the catalyst of the present invention may be, for example, 20.0 cm$^{-1}$ or more, and is preferably 21.0 cm$^{-1}$ or more, more preferably 22.0 cm$^{-1}$ or more, and particularly preferably 22.5 cm$^{-1}$ or more. The Raman D half width at half maximum of the catalyst of the present invention may be specified by arbitrarily combining any one of the above-mentioned lower limit values and any one of the above-mentioned upper limit values.

Herein, according to a reference (A. Sadezky et al., Carbon 43 (2005) 1731-1742), in the Raman spectrum of a carbon material, the D band is a component derived from a carbon atom adjacent to a disordered lattice, such as an edge portion of a graphene layer. Moreover, the half width at half maximum of the D band represents crystallinity of carbon around the edge portion. That is, as the crystallinity of carbon around the edge portion in a carbon structure becomes higher, the Raman D half width at half maximum of the carbon structure is reduced more. Accordingly, a carbon structure exhibiting a Raman D half width at half maximum equal to or smaller than the above-mentioned upper limit value contributes to improvement in durability because the carbon structure includes carbon having high crystallinity around its edge portion.

Meanwhile, a carbon structure exhibiting an excessively small Raman D half width at half maximum has inferior aptitude for supporting catalyst metal particles because the crystallinity of carbon around its edge portion is too high. In contrast, a carbon structure exhibiting a Raman D half width at half maximum equal to or larger than the above-mentioned lower limit value has excellent aptitude for supporting catalyst metal particles, and as a result, contributes to improvement in durability and/or catalytic function of a metal-supported catalyst because the carbon structure includes carbon having appropriate crystallinity around its edge portion.

The catalyst of the present invention preferably has a BET specific surface area of 350 (m$^2$/g-carbon carrier) or more. In the present application, a numerical value unit "/g-carbon carrier" represents a value per gram of the carbon carrier included in the catalyst of the present invention. Meanwhile, a numerical value unit "/g" represents a value per gram of the catalyst of the present invention.

The BET specific surface area of the catalyst of the present invention is, for example, more preferably 400 (m$^2$/g-carbon carrier) or more, still more preferably 450 (m$^2$/g-carbon carrier) or more, still more preferably 500 (m$^2$/g-carbon carrier) or more, still more preferably 550 (m$^2$/g-carbon carrier) or more, still more preferably 600 (m$^2$/g-carbon carrier) or more, still more preferably 650 (m$^2$/g-carbon carrier) or more, still more preferably 700 (m$^2$/g-carbon carrier) or more, still

more preferably 750 (m$^2$/g-carbon carrier) or more, still more preferably 800 (m$^2$/g-carbon carrier) or more, still more preferably 850 (m$^2$/g-carbon carrier) or more, still more preferably 900 (m$^2$/g-carbon carrier) or more, still more preferably 950 (m$^2$/g-carbon carrier) or more, still more preferably 1,000 (m$^2$/g-carbon carrier) or more, still more preferably 1,050 (m$^2$/g-carbon carrier) or more, still more preferably 1,100 (m$^2$/g-carbon carrier) or more, still more preferably 1,150 (m$^2$/g-carbon carrier) or more, still more preferably 1,200 (m$^2$/g-carbon carrier) or more, still more preferably 1,250 (m$^2$/g-carbon carrier) or more, and particularly preferably 1,300 (m$^2$/g-carbon carrier) or more. The BET specific surface area of the catalyst of the present invention may be, for example, 3,000 (m$^2$/g-carbon carrier) or less, 2,500 (m$^2$/g-carbon carrier) or less, 2,000 (m$^2$/g-carbon carrier) or less, 1,800 (m$^2$/g-carbon carrier) or less, 1,700 (m$^2$/g-carbon carrier) or less, 1,600 (m$^2$/g-carbon carrier) or less, 1,500 (m$^2$/g-carbon carrier) or less, or 1,400 (m$^2$/g-carbon carrier) or less. The BET specific surface area of the catalyst of the present invention may be specified by arbitrarily combining any one of the above-mentioned lower limit values and any one of the above-mentioned upper limit values.

The BET specific surface area (m$^2$/g-carbon carrier) of the catalyst of the present invention is calculated from the BET specific surface area (m$^2$/g) of the catalyst of the present invention obtained by a BET method from a nitrogen adsorption isotherm at a temperature of 77 K and the weight ratio of the carbon carrier in the catalyst of the present invention obtained by inductively coupled plasma optical emission spectrometry.

The catalyst of the present invention preferably has an average pore diameter of 8.0 nm or less. In this case, the average pore diameter of the catalyst of the present invention is, for example, more preferably 7.0 nm or less, still more preferably 6.0 nm or less, still more preferably 5.0 nm or less, still more preferably 4.5 nm or less, still more preferably 4.0 nm or less, still more preferably 3.8 nm or less, still more preferably 3.6 nm or less, still more preferably 3.4 nm or less, still more preferably 3.2 nm or less, still more preferably 3.0 nm or less, still more preferably 2.9 nm or less, still more preferably 2.8 nm or less, still more preferably 2.7 nm or less, still more preferably 2.6 nm or less, and particularly preferably 2.5 nm or less.

The average pore diameter of the catalyst of the present invention may be, for example, 1.0 nm or more, and is preferably 1.2 nm or more, more preferably 1.4 nm or more, still more preferably 1.6 nm or more, and particularly preferably 1.8 nm or more. The average pore diameter of the catalyst of the present invention may be specified by arbitrarily combining any one of the above-mentioned lower limit values and any one of the above-mentioned upper limit values. The average pore diameter of the catalyst of the present invention is obtained by a BJH method from a nitrogen adsorption isotherm of the catalyst of the present invention at a temperature of 77 K.

When the average pore diameter of a metal-supported catalyst is too large, for example, in the case where the metal-supported catalyst is used as an electrode catalyst of a fuel cell, an ionomer is liable to penetrate into pores of the metal-supported catalyst. As a result, the catalyst metal particles supported in the pores are covered with the ionomer, and a reduction in catalytic activity is liable to occur. In contrast, a porous structure having an average pore diameter equal to or smaller than the above-mentioned upper limit value contributes to improvement in durability and/or catalytic function because the ionomer is less liable to penetrate into its pores.

When the average pore diameter of the metal-supported catalyst is too small, the catalyst metal particles are liable to be supported on the outer surface of the carbon carrier rather than in its pores, and hence durability is reduced. In contrast, a porous structure having an average pore diameter equal to or larger than the above-mentioned lower limit value contributes to improvement in durability because the catalyst metal particles are effectively supported in its pores.

The catalyst of the present invention preferably has a ratio (hereinafter referred to as "less than 5 nm/5-70 pore volume ratio") of the volume (cm$^3$/g-carrier) of pores each having a pore diameter of less than 5 nm (hereinafter referred to as "less than 5 nm pore volume") to the volume (cm$^3$/g-carrier) of pores each having a pore diameter of 5 nm or more and 70 nm or less (hereinafter referred to as "5-70 nm pore volume") of 1.5 or more.

The less than 5 nm/5-70 pore volume ratio of the catalyst of the present invention is, for example, more preferably 2.0 or more, still more preferably 3.0 or more, still more preferably 4.0 or more, still more preferably 5.0 or more, still more preferably 6.0 or more, still more preferably 7.0 or more, still more preferably 8.0 or more, still more preferably 9.0 or more, still more preferably 10.0 or more, still more preferably 11.0 or more, still more preferably 12.0 or more, still more preferably 13.0 or more, still more preferably 14.0 or more, still more preferably 15.0 or more, still more preferably 16.0 or more, still more preferably 17.0 or more, still more preferably 18.0 or more, still more preferably 19.0 or more, and particularly preferably 20.0 or more.

The less than 5 nm/5-70 pore volume ratio of the catalyst of the present invention may be, for example, 50.0 or less, and is preferably 45.0 or less, more preferably 40.0 or less, still more preferably 35.0 or less, still more preferably 30.0 or less, still more preferably 25.0 or less, and particularly preferably 23.0 or less. The less than 5 nm/5-70 pore volume ratio of the catalyst of the present invention may be specified by arbitrarily combining any one of the above-mentioned lower limit values and any one of the above-mentioned upper limit values.

The 5-70 nm pore volume (cm$^3$/g-carbon carrier) and the less than 5 nm pore volume (cm$^3$/g-carbon carrier) used for the calculation of the less than 5 nm/5-70 pore volume ratio of the catalyst of the present invention are calculated from the 5-70 nm pore volume (cm$^3$/g) and the less than 5 nm pore volume (cm$^3$/g) of the catalyst of the present invention, respectively, obtained by a BJH method from the nitrogen adsorption isotherm at a temperature of 77 K and the weight ratio of the carbon carrier in the catalyst of the present invention obtained by inductively coupled plasma optical emission spectrometry.

When the less than 5 nm/5-70 pore volume ratio of the metal-supported catalyst is too low (that is, when the 5-70 nm pore volume is too high compared to the less than 5 nm pore volume), for example, in the case where the metal-supported catalyst is used as an electrode catalyst of a fuel cell, generated water is liable to penetrate into its pores. As a result, the catalyst metal particles supported in the pores are liable to be degraded owing to oxidation. In contrast, a porous structure having a less than 5 nm/5-70 pore volume ratio equal to or higher than the above-mentioned lower limit value contributes to improvement in durability and/or function of the metal-supported catalyst because the catalyst metal particles supported in the pores are less liable to be degraded.

When the less than 5 nm/5-70 pore volume ratio of the metal-supported catalyst is too high (that is, the less than 5 nm pore volume is too large compared to the 5-70 nm pore volume), for example, in the case where the metal-supported catalyst is used as an electrode catalyst of a fuel cell, an output characteristic is liable to be reduced because a substance has low dispersibility in pores. In contrast, a porous structure having a less than 5 nm/5-70 pore volume ratio equal to or lower than the above-mentioned upper limit value contributes to improvement in output characteristic because the dispersibility of the substance is improved.

The catalyst of the present invention preferably has a proportion (hereinafter referred to as "noble metal content") of the weight of the noble metal contained in the catalyst of the present invention (more specifically, the noble metal contained in the catalyst metal particles) to the weight of the catalyst of the present invention of 30 wt% or more. The noble metal content of the catalyst of the present invention is, for example, more preferably 35 wt% or more, still more preferably 40 wt% or more, still more preferably 45 wt% or more, and particularly preferably 50 wt% or more. The noble metal content of the catalyst of the present invention may be, for example, 90 wt% or less, 80 wt% or less, 70 wt% or less, or 60 wt% or less. The noble metal content of the catalyst of the present invention may be specified by arbitrarily combining any one of the above-mentioned lower limit values and any one of the above-mentioned upper limit values. The noble metal content of the catalyst of the present invention is obtained by inductively coupled plasma atomic emission spectroscopy.

The catalyst of the present invention preferably has an electrochemically effective specific surface area (ECSA) of the noble metal contained in the catalyst of 45 ($m^2$/g-noble metal) or more. The numerical value unit "/g-noble metal" represents a value per gram of the noble metal contained in the catalyst of the present invention.

The ECSA of the noble metal contained in the catalyst of the present invention is, for example, more preferably 50 ($m^2$/g-noble metal) or more, still more preferably 55 ($m^2$/g-noble metal) or more, still more preferably 60 ($m^2$/g-noble metal) or more, still more preferably 65 ($m^2$/g-noble metal) or more, still more preferably 70 ($m^2$/g-noble metal) or more, still more preferably 75 ($m^2$/g-noble metal) or more, and particularly preferably 80 ($m^2$/g-noble metal) or more. The ECSA of the noble metal contained in the catalyst of the present invention may be, for example, 200 ($m^2$/g-noble metal) or less, 180 ($m^2$/g-noble metal) or less, 160 ($m^2$/g-noble metal) or less, 140 ($m^2$/g-noble metal) or less, 120 ($m^2$/g-noble metal) or less, or 100 ($m^2$/g-noble metal) or less. The ECSA of the noble metal contained in the catalyst of the present invention may be specified by arbitrarily combining any one of the above-mentioned lower limit values and any one of the above-mentioned upper limit values.

For example, when the noble metal contained in the catalyst metal particles supported in the catalyst of the present invention is platinum, the ECSA ($m^2$/g-noble metal) of the noble metal contained in the catalyst of the present invention is the ECSA ($m^2$/g-Pt) of platinum contained in the catalyst of the present invention. Herein, the numerical value unit "/g-Pt" represents a value per gram of platinum contained in the catalyst of the present invention.

The ECSA of the noble metal contained in the catalyst of the present invention is obtained by cyclic voltammetry involving performing potential sweep at a sweep rate of 10 mV/sec through use of a rotating ring-disk electrode apparatus including a working electrode carrying the catalyst of the present invention.

The catalyst of the present invention preferably has a geometric specific surface area of the noble metal contained in the catalyst of 52 ($m^2$/g-noble metal) or more. The geometric specific surface area of the noble metal contained in the catalyst of the present invention is, for example, more preferably 55 ($m^2$/g-noble metal) or more, still more preferably 60 ($m^2$/g-noble metal) or more, still more preferably 70 ($m^2$/g-noble metal) or more, still more preferably 75 ($m^2$/g-noble metal) or more, still more preferably 80 ($m^2$/g-noble metal) or more, still more preferably 85 ($m^2$/g-noble metal) or more, still more preferably 90 ($m^2$/g-noble metal) or more, still more preferably 95 ($m^2$/g-noble metal) or more, still more preferably 100 ($m^2$/g-noble metal) or more, still more preferably 105 ($m^2$/g-noble metal) or more, still more preferably 110 ($m^2$/g-noble metal) or more, and particularly preferably 115 ($m^2$/g-noble metal) or more. The geometric specific surface area of the noble metal contained in the catalyst of the present invention may be, for example, 200 ($m^2$/g-noble metal) or less, 190 ($m^2$/g-noble metal) or less, 180 ($m^2$/g-noble metal) or less, 170 ($m^2$/g-noble metal) or less, 160 ($m^2$/g-noble metal) or less, 150 ($m^2$/g-noble metal) or less, 145 ($m^2$/g-noble metal) or less, 140 ($m^2$/g-noble metal) or less, 135 ($m^2$/g-noble metal) or less, or 130 ($m^2$/g-noble metal) or less. The geometric specific surface area ($m^2$/g-noble metal) of the noble metal contained in the catalyst of the present invention may be specified by arbitrarily combining any one of the above-mentioned lower limit values and any one of the above-mentioned upper limit values.

When the noble metal contained in the catalyst metal particles supported in the catalyst of the present invention is platinum, the geometric specific surface area ($m^2$/g-noble metal) of the noble metal contained in the catalyst of the present invention is the geometric specific surface area ($m^2$/g-Pt) of platinum contained in the catalyst of the present invention.

The geometric specific surface area of the noble metal contained in the catalyst of the present invention is obtained by powder X-ray diffraction of the catalyst of the present invention. Specifically, the geometric specific surface area of the noble metal contained in the catalyst of the present invention is obtained by subjecting a (111) diffraction line of the noble metal, which appears in an X-ray diffraction pattern obtained by powder X-ray diffraction of the catalyst of the present invention, to peak separation, calculating the respective peaks obtained by the peak separation for values of "6/density/crystallite diameter×peak area proportion×noble metal atom proportion," and adding the calculated values for all the peaks.

The catalyst of the present invention preferably has a carbon anchoring proportion calculated by the following equation (I) of 15.0% or more.

Carbon anchoring proportion (%) =(1-electrochemically effective specific surface area /geometric specific surface area) ×100      (I)

In the equation (I), the "electrochemically effective specific surface area" and the "geometric specific surface area" are an electrochemically effective specific surface area ($m^2$/g-noble metal) and a geometric specific surface area ($m^2$/g-noble metal), respectively, of the noble metal contained in the catalyst of the present invention.

The carbon anchoring proportion of the catalyst of the present invention is, for example, more preferably 16.0% or more, more preferably 18.0% or more, still more preferably 20.0% or more, still more preferably 21.0% or more, still more preferably 22.0% or more, still more preferably 23.0% or more, still more preferably 24.0% or more, still more preferably 25.0% or more, still more preferably 26.0% or more, still more preferably 27.0% or more, and particularly preferably 28.0% or more.

The carbon anchoring proportion of the catalyst of the present invention may be, for example, 50.0% or less, 45.0% or less, 40.0% or less, 35.0% or less, 33.0% or less, 32.0% or less, 31.0% or less, or 30.0% or less. The carbon anchoring proportion of the catalyst of the present invention may be specified by arbitrarily combining any one of the above-mentioned lower limit values and any one of the above-mentioned upper limit values.

For example, when the catalyst metal particles supported on the carbon carrier in the catalyst of the present invention each contain platinum as the noble metal, the carbon anchoring proportion of the catalyst of the present invention is calculated by using the electrochemically effective specific surface area ($m^2$/g-Pt) and the geometric specific surface area ($m^2$/g-Pt) of platinum contained in the catalyst of the present invention as the "electrochemically effective specific surface area" and the "geometric specific surface area" in the equation (I), respectively.

The carbon anchoring proportion (%) represents a proportion of, in the geometric specific surface area of the noble metal (e.g., platinum) contained in the catalyst metal particles supported on the carbon carrier, an area that does not contribute to the electrochemically effective specific surface area (ECSA) of the noble metal. Accordingly, the carbon anchoring proportion (%) reflects a proportion of, in the surface area of the catalyst metal particles supported on the carbon carrier, a surface area covered with carbon (i.e., the surface area of a portion that is strongly fixed (anchored) to the carbon carrier by being covered with carbon). Accordingly, in a metal-supported catalyst having a carbon anchoring proportion equal to or higher than the above-mentioned lower limit value, part of the catalyst metal particles is effectively fixed to the carbon carrier, and hence the metal-supported catalyst has excellent durability and/or catalytic function.

Meanwhile, an excessively high carbon anchoring proportion indicates that the proportion of the surface area covered with carbon to the surface area of the catalyst metal particles supported on the carbon carrier is too large, that is, the proportion of a surface area contributing to a catalytic function to the surface area of the catalyst metal particles is too small. Accordingly, when the carbon anchoring proportion of the metal-supported catalyst is too large, for example, in the case where the metal-supported catalyst is used as an electrode catalyst of a fuel cell, an output characteristic is liable to be reduced. In contrast, a carbon anchoring proportion equal to or lower than the above-mentioned upper limit indicates that the catalyst metal particles supported on the carbon carrier have a large surface area which functions as a catalyst, and contributes to improvement in output characteristic.

The catalyst of the present invention preferably has a carbon anchoring amount calculated by the following equation (II) of 5.0 $m^2$/g or more:

Carbon anchoring amount ($m^2$/g) ={noble metal content (wt%)/100} ×(geometric specific surface area -electrochemically effective specific surface area)      (II)

In the equation (II), the "noble metal content (wt%)" is the proportion (wt%) of the weight of the noble metal contained in the catalyst of the present invention to the weight of the catalyst of the present invention, and is obtained by inductively coupled plasma optical emission spectrometry. The "geometric specific surface area" and the "electrochemically effective specific surface area" are the geometric specific surface area ($m^2$/g-noble metal) and the electrochemically effective specific surface area ($m^2$/g-noble metal), respectively, of the noble metal contained in the catalyst of the present invention.

The carbon anchoring amount of the catalyst of the present invention is, for example, more preferably 6.0 $m^2$/g or more, more preferably 7.0 $m^2$/g or more, still more preferably 8.0 $m^2$/g or more, still more preferably 9.0 $m^2$/g or more, still more preferably 10.0 $m^2$/g or more, still more preferably 11.0 $m^2$/g or more, still more preferably 12.0 $m^2$/g or more, still more preferably 13.0 $m^2$/g or more, still more preferably 14.0 $m^2$/g or more, and particularly preferably 15.0 $m^2$/g or more.

The carbon anchoring amount of the catalyst of the present invention may be, for example, 40.0 $m^2$/g or less, and is preferably 35.0 $m^2$/g or less, more preferably 30.0 $m^2$/g or less, still more preferably 25.0 $m^2$/g or less, and particularly preferably 20.0 $m^2$/g or less. The carbon anchoring amount of the catalyst of the present invention may be specified by arbitrarily combining any one of the above-mentioned lower limit values and any one of the above-mentioned upper limit values.

For example, when the catalyst metal particles supported on the carbon carrier in the catalyst of the present invention each contain platinum as the noble metal, the carbon anchoring amount of the catalyst of the present invention is calculated by using a "platinum content (wt%)," which is the proportion of the weight of platinum contained in the catalyst of the present invention to the weight of the catalyst of the present invention, as the "noble metal content" in the equation (II), and using the electrochemically effective specific surface area ($m^2$/g-Pt) and the geometric specific surface area ($m^2$/g-Pt) of platinum contained in the catalyst of the present invention as the "electrochemically effective specific surface area" and the "geometric specific surface area" therein, respectively.

The carbon anchoring amount ($m^2$/g) is a parameter corresponding to the surface area ($m^2$) of the noble metal covered with carbon contained in 1 g of the metal-supported catalyst calculated in consideration of the noble metal content (wt%) of the catalyst metal particles in the metal-supported catalyst. Accordingly, in a metal-supported catalyst having a carbon anchoring amount equal to or larger than the above-mentioned lower limit value, part of the catalyst metal particles is effectively fixed to the carbon carrier, and hence the metal-supported catalyst has excellent durability and/or catalytic function.

Meanwhile, an excessively large carbon anchoring amount indicates that the surface area covered with carbon in the surface area of the catalyst metal particles supported on the carbon carrier is too large, that is, a surface area contributing to a catalytic function in the surface area of the catalyst metal particles is too small. Accordingly, when the carbon anchoring amount of the metal-supported catalyst is too large, for example, in the case where the metal-supported catalyst is used as an electrode catalyst of a fuel cell, an output characteristic is liable to be reduced. In contrast, a carbon anchoring amount equal to or lower than the above-mentioned upper limit indicates that the catalyst metal particles covered with the carbon carrier have a large surface area which functions as a catalyst, and contributes to improvement in output characteristic.

The catalyst of the present invention preferably has a durability index calculated by the following equation (III) of 0.50 cm or more.

$$\text{Durability index (cm)} = \text{carbon anchoring proportion (\%)} \times (1/\text{Raman D half width at half maximum}) \qquad \text{(III)}$$

Herein, as described above, the Raman D half width at half maximum represents the crystallinity of carbon around the edge portion in a carbon structure, and has a smaller value as the crystallinity of carbon becomes higher. In view of the foregoing, the durability index, which is calculated by a product of the reciprocal of the Raman D half width at half maximum and the carbon anchoring proportion, is used as an index of durability in consideration of the crystallinity of carbon.

The durability index of the catalyst of the present invention is, for example, more preferably 0.55 cm or more, still more preferably 0.60 cm or more, still more preferably 0.65 cm or more, still more preferably 0.70 cm or more, still more preferably 0.75 cm or more, still more preferably 0.80 cm or more, still more preferably 0.85 cm or more, still more preferably 0.90 cm or more, still more preferably 0.95 cm or more, still more preferably 1.00 cm or more, still more preferably 1.05 cm or more, still more preferably 1.10 cm or more, and particularly preferably 1.15 cm or more. The durability index of the catalyst of the present invention may be, for example, 5.00 cm or less, 4.50 cm or less, 4.00 cm or less, 3.50 cm or less, 3.00 cm or less, 2.50 cm or less, 2.00 cm or less, or 1.50 cm or less. The durability index of the catalyst of the present invention may be specified by arbitrarily combining any one of the above-mentioned lower limit values and any one of the above-mentioned upper limit values.

A method of producing a metal-supported catalyst according to an embodiment of the present invention (hereinafter referred to as "method of the present invention") includes: an impregnation step of impregnating a carbon carrier with a precursor of a metal for forming catalyst metal particles; a reduction treatment step of subjecting the precursor of the metal with which the carbon carrier has been impregnated to reduction treatment, to thereby obtain a metal-supported catalyst in which particles of the metal are supported; and a heat treatment step of subjecting the metal-supported catalyst to heat treatment.

In the impregnation step, a carbon carrier is impregnated with a precursor of a metal for forming catalyst metal particles. That is, for example, when catalyst metal particles each containing a pure noble metal are supported, the carbon carrier is impregnated with a precursor of the noble metal. When catalyst metal particles each containing a noble metal alloy are supported, the carbon carrier is impregnated with a precursor of a noble metal and a precursor of a non-noble metal for forming the noble metal alloy.

In the reduction treatment step, the carbon carrier having been impregnated with the precursor of the metal in the impregnation step is subjected to reduction treatment, to thereby obtain a metal-supported catalyst including the carbon carrier and particles of the metal supported on the carbon carrier. The reduction treatment may be liquid-phase reduction treatment, or may be gas-phase reduction treatment, but is preferably gas-phase reduction treatment.

In the heat treatment step, the metal-supported catalyst obtained in the reduction treatment step is subjected to heat treatment for covering part of the individual catalyst metal particles with carbon in the carbon carrier of the metal-supported catalyst.

An atmosphere for performing the heat treatment is not particularly limited as long as the effects of the present invention are obtained, but the heat treatment is preferably performed in an atmosphere containing an inert gas (e.g., one or more selected from the group consisting of: a nitrogen gas; an argon gas; a helium gas; and a neon gas), or in a vacuum.

The concentration of the inert gas in the atmosphere for performing the heat treatment is not particularly limited as long as the effects of the present invention are obtained, but is, for example, preferably 50 vol% or more, more preferably 60 vol% or more, still more preferably 70 vol% or more, still more preferably 80 vol% or more, still more preferably 90 vol% or more, and particularly preferably 100 vol%.

A temperature (heat treatment temperature) at which the metal-supported catalyst is heated in the heat treatment is not particularly limited as long as the effects of the present invention are obtained, but is, for example, preferably 600°C or more, more preferably 650°C or more, still more preferably 700°C or more, still more preferably 750°C or more, and particularly preferably 800°C or more. The heat treatment temperature may be, for example, 1,300°C or less, and is preferably 1,100°C or less, more preferably 1,000°C or less, and particularly preferably 900°C or less. The heat treatment temperature may be specified by arbitrarily combining any one of the above-mentioned lower limit values and any one of the above-mentioned upper limit values.

A period of time (heat treatment time) for which the metal-supported catalyst is heated at the heat treatment temperature is not particularly limited as long as the effects of the present invention are obtained, but is, for example, preferably 5 minutes or more, more preferably 10 minutes or more, still more preferably 20 minutes or more, still more preferably 30 minutes or more, still more preferably 40 minutes or more, still more preferably 60 minutes or more, still more preferably 80 minutes or more, and particularly preferably 100 minutes or more. The heat treatment time may be, for example, 24 hours or less, and is preferably 12 hours or less, more preferably 6 hours or less, still more preferably 180 minutes or less, and particularly preferably 150 minutes or less. The heat treatment time may be specified by arbitrarily combining any one of the above-mentioned lower limit values and any one of the above-mentioned upper limit values.

According to the method of the present invention, a metal-supported catalyst having both excellent durability and an excellent catalytic function is produced. That is, the above-mentioned catalyst of the present invention is preferably produced by the method of the present invention.

An electrode according to an embodiment of the present invention (hereinafter referred to as "electrode of the present invention") includes the catalyst of the present invention. That is, the electrode of the present invention is, for example, a battery electrode including an electrode base material and the catalyst of the present invention supported on the electrode base material. The electrode of the present invention is preferably a battery electrode. That is, the electrode of the present invention is preferably, for example, an electrode for a fuel cell (e.g., a polymer electrolyte fuel cell), an air cell, a water electrolyzer (e.g., a polymer electrolyte water electrolyzer), a redox flow battery, or a halogen battery.

The electrode of the present invention may be a cathode or an anode, but is preferably a cathode. That is, the electrode of the present invention is a cathode or an anode of a fuel cell, an air cell, a water electrolyzer, a redox flow battery, or a halogen battery, preferably a cathode.

A battery according to an embodiment of the present invention (hereinafter referred to as "battery of the present invention") includes the electrode of the present invention. Specifically, the battery of the present invention is preferably a fuel cell (e.g., a polymer electrolyte fuel cell), an air cell, a redox flow battery, or a halogen battery including the electrode of the present invention. The battery of the present invention is preferably a membrane electrode assembly (MEA) including the electrode of the present invention.

The battery of the present invention is a battery including the electrode of the present invention as a cathode or an anode, preferably a battery including the electrode of the present invention as a cathode. That is, the battery of the present invention is a fuel cell, an air cell, a redox flow battery, or a halogen battery including the electrode of the present invention as a cathode or an anode, preferably a fuel cell, an air cell, a redox flow battery, or a halogen battery including the electrode of the present invention as a cathode.

Next, specific Examples according to the embodiments of the present invention will be described.

Examples

[Production of Carbon Carrier]

1.0 g of polyacrylonitrile (PAN), 1.0 g of 2-methylimidazole, 6.0 g of zinc chloride ($ZnCl_2$), and 30 g of dimethylformamide were mixed. The solvent was removed from the resultant mixture by drying. The dried mixture was heated in an atmospheric atmosphere and subjected to infusibilization at 250°C.

The mixture after the infusibilization was carbonized by heating at 1,500°C under a gauge pressure of 0.90 MPa in a nitrogen atmosphere. Dilute hydrochloric acid was added to the carbonized material obtained by the carbonization, and the mixture was stirred. After that, the suspension containing the carbonized material was filtered with a filtration membrane, and the carbonized material was washed with distilled water until the filtrate became neutral. In this manner, metal removal treatment by washing with an acid was performed.

The carbonized material after the metal removal treatment was pulverized with a fine pulverizer until the median of its particle diameters reached 0.4 um or less. The carbonized material after the pulverization was dried in a vacuum so that water was removed. After that, the carbonized material was subjected to heat treatment at 300°C in a nitrogen atmosphere. The carbonized material thus obtained was used as a carbon carrier C1500.

A carbonized material was obtained in the same manner as in the case of the carbon carrier C1500 except that a carbonizing temperature of 2,000°C was adopted instead of 1,500°C, and the carbonized material was used as a carbon carrier C2000.

The carbon carrier C1500 was subjected to graphitization treatment by heating at 1,800°C, 2,000°C, 2,100°C, or 2,400°C under normal pressure in a nitrogen atmosphere. The carbonized materials thus obtained by the graphitization treatment at 1,800°C, 2,000°C, 2,100°C, and 2,400°C were used as a carbon carrier C1500-G1800, a carbon carrier C1500-G2000, a carbon carrier C1500-G2100, and a carbon carrier C1500-G2400, respectively.

Commercially available Ketjen Black (EC600JD, manufactured by Lion Specialty Chemicals Co., Ltd.) was used as a carbon carrier KB. The carbon carrier KB was subjected to graphitization treatment by heating at 2,000°C under normal pressure in a nitrogen atmosphere. The carbon material obtained by the graphitization treatment was used as a carbon carrier KB-G2000.

[Production of Metal-supported Catalyst]

In each of Example 1, Example 3 to Example 6, Example C2, Example C4, and Example C5, platinum particles were supported on the carbon carrier by a gas-phase reduction method as described below. First, an impregnation step was performed. That is, 1 g of the carbon carrier and 20 g of an aqueous solution, which contained chloroplatinic acid ($H_2PtCl_6$) serving as a platinum precursor in such an amount that a platinum concentration became 5 wt% (platinum content: 1 g), were stirred and mixed for 1 hour. The mixed solution was first kept under a reduced pressure of - 0.10 MPa or less in terms of gauge pressure (specifically, from -0.10 MPa to -0.1013 MPa in terms of gauge pressure) for 1 hour, and was then kept under a pressure of 0.15 MPa or more in terms of gauge pressure (specifically, from 0.15 MPa to 0.20 MPa in terms of gauge pressure) for 1 hour, followed by stirring and mixing for 66 hours. The impregnation step was performed while the temperature of the mixed solution was kept at 5°C or less (specifically, from 0°C to 5°C).

Next, a reduction step was performed. That is, the mixed solution obtained in the impregnation step was dried under a vacuum at 100°C, and was kept in a nitrogen atmosphere at 150°C so that its solvent component was volatilized. The resultant solid was subjected to heat treatment (gas-phase reduction treatment) in a hydrogen atmosphere (hydrogen gas: 100 vol%) at 350°C for 120 minutes.

After that, a heat treatment step was performed. That is, the solid obtained in the reduction step was subjected to heat treatment in a nitrogen atmosphere at 825°C for 120 minutes. Thus, a metal-supported catalyst including the carbon carrier (the carbon carrier C1500 in Example 1, the carbon carrier C1500-G1800 in Example 3, the carbon carrier C1500-G2000 in Example 4, the carbon carrier C1500-G2100 in Example 5, the carbon carrier C2000 in Example 6, the carbon carrier C1500-G2400 in Example C2, the carbon carrier KB in Example C4, or the carbon carrier KB-G2000 in Example C5) and platinum particles supported on the carbon carrier, was obtained.

In Example 2, a metal-supported catalyst including the carbon carrier C1500 and platinum particles supported on the carbon carrier was obtained in the same manner as in the case of Example 1 or the like described above except that: the mixed solution was kept under normal pressure for 2 hours instead of being kept under a vacuum and under pressure in the impregnation step; and a heat treatment time of 40 minutes was adopted instead of 120 minutes in the heat treatment step.

In Example 7, a metal-supported catalyst including the carbon carrier C1500-G2000 and platinum particles supported on the carbon carrier was obtained in the same manner as in the case of Example 1 or the like described above except that a heat treatment time of 40 minutes was adopted instead of 120 minutes in the heat treatment step.

In Example 8, a metal-supported catalyst including the carbon carrier C1500-G2000 and platinum particles supported on the carbon carrier was obtained in the same manner as in the case of Example 1 or the like described above except that the mixed solution was kept under normal pressure for 2 hours instead of being kept under a vacuum and under pressure in the impregnation step.

In Example 9, platinum alloy particles were supported on the carbon carrier by a gas-phase reduction method as described below. First, a first impregnation step was performed. That is, 1 g of the carbon carrier and 14 g of an aqueous solution, which contained chloroplatinic acid ($H_2PtCl_6$) in such an amount that a platinum concentration became 5 wt% (platinum content: 0.70 g), were stirred and mixed for 1 hour. The mixed solution was first kept under a reduced pressure of -0.10 MPa or less in terms of gauge pressure (specifically, from -0.10 MPa to -0.1013 MPa in terms of gauge pressure) for 1 hour, and was then kept under a pressure of 0.15 MPa or more in terms of gauge pressure (specifically, from 0.15 MPa to 0.20 MPa in terms of gauge pressure) for 1 hour, followed by stirring and mixing for 66 hours. The first impregnation step was performed while the temperature of the mixed solution was kept at 5°C or less (specifically, from 0°C to 5°C).

Next, a first gas-phase reduction step was performed. That is, the mixed solution obtained in the first impregnation step was dried under a vacuum at 100°C, and was further kept in a nitrogen atmosphere at 150°C so that its solvent component was volatilized. The resultant solid was subjected to heat treatment (first gas-phase reduction treatment) in a hydrogen atmosphere (hydrogen gas: 100 vol%) at 350°C for 120 minutes. Thus, a platinum-supported catalyst was obtained.

Next, a second impregnation step was performed. That is, 1.7 g of the platinum-supported catalyst obtained in the first gas-phase reduction step and 20 g of an aqueous solution, which contained cobalt chloride ($CoCl_2$) serving as a cobalt precursor in such an amount that a cobalt concentration became 0.21 wt% (cobalt content: 0.042 g), were stirred and mixed for 18 hours. The mixed solution was first kept under a reduced pressure of - 0.10 MPa or less in terms of gauge pressure (specifically, from -0.10 MPa to -0.1013 MPa in terms of gauge pressure) for 1 hour, and was then kept under a pressure of 0.15 MPa or more in terms of gauge pressure (specifically, from 0.15 MPa to 0.20 MPa in terms of gauge pressure) for 1 hour, followed by stirring and mixing for 18 hours. The second impregnation step was performed while the temperature of the mixed solution was kept at 5°C or less (specifically, from 0°C to 5°C).

Next, a second gas-phase reduction step and a heat treatment step were continuously performed. That is, the mixed solution obtained in the second impregnation step was dried under a vacuum at 100°C. The resultant solid was subjected to heat treatment (second gas-phase reduction treatment) in a hydrogen atmosphere (hydrogen gas: 100 vol%) at 700°C for 60 minutes. Subsequently, while the temperature of the atmosphere was maintained within the range of from 650°C to 750°C, the hydrogen atmosphere was replaced with a nitrogen atmosphere (nitrogen gas: 100 vol%), and the solid was subjected to heat treatment in the nitrogen atmosphere at 700°C for 120 minutes. Thus, a platinum alloy-supported catalyst was obtained.

Next, a post-treatment step was performed. That is, in order to remove unnecessary metals from the platinum alloy-supported catalyst obtained in the heat treatment step, the platinum alloy-supported catalyst and a 10% nitric acid solution were mixed for 2 hours. After that, the platinum alloy-supported catalyst and the acid solution were separated from each other by filtration, and the platinum alloy-supported catalyst was washed with distilled water until the filtrate became neutral. The platinum alloy-supported catalyst after the washing was dried under a vacuum at 60°C so that water was removed.

After that, in order to remove nitric acid, the platinum alloy-supported catalyst was subjected to heat treatment in a nitrogen atmosphere at 300°C. Further, in order to reduce and remove a platinum oxide, the platinum alloy-supported catalyst was subjected to heat treatment in a nitrogen atmosphere at 700°C. Thus, a metal-supported catalyst including the carbon carrier C1500-G1800, and alloy particles of platinum and cobalt supported on the carbon carrier was obtained.

In Example C1, a metal-supported catalyst including the carbon carrier C1500 and platinum particles supported on the carbon carrier was obtained in the same manner as in the case of Example 1 or the like described above except that a heat treatment temperature of 600°C was adopted instead of 825°C in the heat treatment step.

In Example C3, platinum particles were supported on the carbon carrier by a liquid-phase reduction method as described below. First, an impregnation step was performed. That is, 1 g of the carbon carrier and 22.2 g of an aqueous solution, which contained chloroplatinic acid ($H_2PtCl_6$) in such an amount that a platinum concentration became 5 wt% (platinum content: 1.1 g), were stirred and mixed for 66 hours.

Next, a liquid-phase reduction step was performed. That is, liquid-phase reduction treatment was performed by adding ethylene glycol as a reducing agent to the mixed solution obtained in the impregnation step, and keeping the mixed solution in an atmospheric atmosphere at 80°C for 4 hours. Thus, a platinum-supported catalyst was obtained. After that, the resultant mixed solution was dried under a vacuum at 100°C, and was kept in a nitrogen atmosphere at 150°C so that its solvent component was volatilized. Thus, a metal-supported catalyst including the carbon carrier C1500-G1800 and platinum particles supported on the carbon carrier was obtained.

In Example C6, a commercially available platinum-supported catalyst Pt/C-1 including a solid carbon carrier without pores and platinum particles supported on the carbon carrier was used as a metal-supported catalyst.

In Example C7, a commercially available platinum-supported catalyst Pt/C-2 including Ketjen Black and platinum particles supported on the Ketjen Black was used as a metal-supported catalyst.

[Raman Spectroscopy]

The metal-supported catalyst was analyzed by Raman spectroscopy. A Raman spectrum was measured with a HORIBA microlaser Raman spectroscopic measuring device (LabRAM, HORIBA Jobin Yvon). Laser used for the measurement had an excitation wavelength of 532 nm and an output of 50 mW, and the measurement was performed through a neutral density filter D3 under the conditions of exposure of 90 seconds $\times$ integration twice. Thus, a Raman spectrum was obtained.

The obtained Raman spectrum was subjected to baseline correction. That is, a straight line connecting the scattering intensity at which a Raman shift ($cm^{-1}$) was in the vicinity of 600 $cm^{-1}$ and the scattering intensity at which a Raman shift ($cm^{-1}$) was in the vicinity of 2,000 $cm^{-1}$ was determined as a baseline, and the baseline was subtracted from each intensity of the scattering spectrum, to thereby perform the baseline correction.

Next, a D band having a peak top in the vicinity of a Raman shift of 1,340 $cm^{-1}$ (specifically, in the range of 1,320 $cm^{-1}$ or more and 1,360 $cm^{-1}$ or less) was identified. Then, a Raman shift ($cm^{-1}$) $B_d$ corresponding to an intensity of half of an intensity $I_d$ of the D band (intensity of the peak top of the D band) was subtracted from a Raman shift ($cm^{-1}$) $A_d$ corresponding to the intensity $I_d$ of the D band. Thus, a Raman D half width at half maximum ($cm^{-1}$) was calculated. That is, the Raman D half width at half maximum of the metal-supported catalyst was calculated by the following equation: Raman D half width at half maximum ($cm^{-1}$)=$A_d$ ($cm^{-1}$)-$B_d$ ($cm^{-1}$).

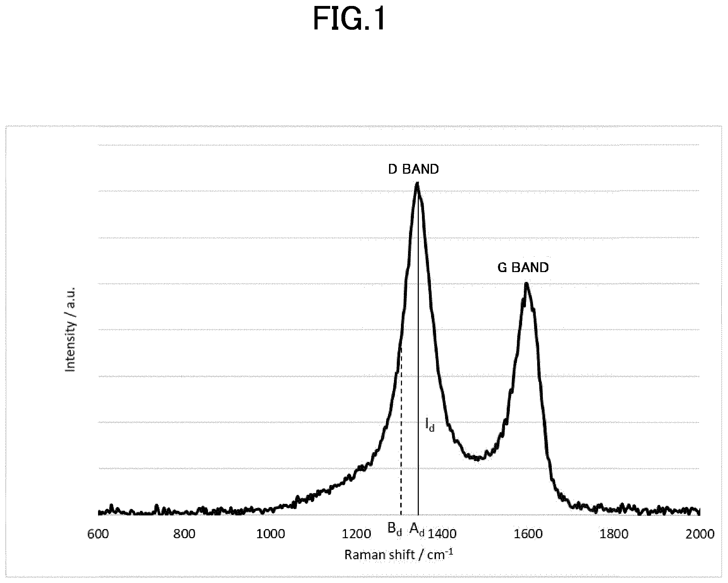

Herein, FIG. 1 is a figure showing an analysis result of a Raman spectrum obtained by Raman spectroscopy of the metal-supported catalyst of Example 1 as an example of the Raman spectrum. In FIG. 1, an abscissa represents a Raman shift ($cm^{-1}$), an ordinate represents a scattering intensity after the baseline correction, $A_d$ represents a Raman shift ($cm^{-1}$) corresponding to the peak top of the D band, and $B_d$ represents a Raman shift ($cm^{-1}$) corresponding to a Raman spectrum exhibiting an intensity of half of the D band intensity $I_d$ (height of the peak top of the D band) on a low wavenumber side with respect to the $A_d$.

[Metal Content: Inductively Coupled Plasma Optical Emission Spectrometry]

The platinum content and non-platinum metal (metal other than platinum) content of the metal-supported catalyst were measured by inductively coupled plasma optical emission spectrometry (ICP-OES). That is, first, 100 mg of the metal-supported catalyst was heated and kept in an atmospheric atmosphere at 800°C for 3 hours so that non-metal components (components except metals) in the metal-supported catalyst were removed.

Next, the metal-supported catalyst was immersed in 5 mL of aqua regia and heated at 50°C for 1 hour so that the metals in the metal-supported catalyst were dissolved. Further, distilled water was added to dilute the resultant so that the volume became 50 mL. Thus, a metal solution was obtained. After that, the platinum concentration and non-platinum metal concentration of the obtained metal solution were measured with a sequential plasma emission spectrometer (ICPS-8100, manufactured by Shimadzu Corporation).

Then, the platinum concentration (mg/mL) and non-platinum metal concentration (mg/mL) of the metal solution were multiplied by the volume (50 mL) of the metal solution to provide a platinum content (mg) and a non-platinum metal content (mg) per 100 mg of the metal-supported catalyst.

Further, the platinum weight (mg) and non-platinum metal weight (mg) of the metal-supported catalyst were divided by the weight of the metal-supported catalyst, i.e., 100 mg, and were multiplied by 100. Thus, a platinum content (wt%) and a non-platinum metal content (wt%) obtained by ICP-OES were calculated. In addition, the total of the platinum content (wt%) and non-platinum metal content (wt%) of the metal-supported catalyst was obtained as the metal content (wt%) of the metal-supported catalyst.

[Specific Surface Area, Average Pore Diameter, and Total Pore Volume]

The specific surface area, average pore diameter, and total pore volume of the metal-supported catalyst by a nitrogen adsorption method were measured with a specific surface area/pore distribution measuring device (TriStar II 3020, manufactured by Shimadzu Corporation) and analysis software (TriStar II 3020) included therein.

That is, first, 0.1 g of the metal-supported catalyst was kept at 100°C and $6.7 \times 10^{-2}$ Pa for 3 hours so that water adsorbing to the metal-supported catalyst was removed. Next, a change in amount of adsorption of nitrogen to the metal-supported catalyst in association with a change in pressure of a nitrogen gas was measured at a temperature of 77 K to provide a nitrogen adsorption isotherm at a temperature of 77 K.

Then, the BET specific surface area ($m^2/g$) of the metal-supported catalyst by a nitrogen adsorption method was obtained by a BET method from the nitrogen adsorption isotherm at a temperature of 77 K. Further, a BET specific surface area ($m^2/g$-carbon carrier) per gram of the carbon carrier in the metal-supported catalyst was calculated based on the BET specific surface area ($m^2/g$) of the metal-supported catalyst and the above-mentioned metal content (wt%) of the metal-supported catalyst obtained by ICP-OES. That is, first, the weight ratio of the carbon carrier in the metal-supported catalyst was calculated by the following equation: weight ratio of carbon carrier=1-(metal content (wt%) obtained by ICP-OES)/100. Next, the BET specific surface area ($m^2$/g-carbon carrier) per gram of the carbon carrier was calculated by dividing the BET specific surface area ($m^2$/g) of the metal-supported catalyst by the obtained weight ratio of the carbon carrier.

The volume (5-70 nm pore volume) ($cm^3$/g) of pores each having a pore diameter of 5 nm or more and 70 nm or less and the volume (less than 5 nm pore volume) ($cm^3$/g) of pores each having a pore diameter of less than 5 nm were obtained by a BJH method from the nitrogen adsorption isotherm at a temperature of 77 K.

Then, a 5-70 nm pore volume ($cm^3$/g-carbon carrier) and a less than 5 nm pore volume ($cm^3$/g-carbon carrier) per gram of the carbon carrier in the metal-supported catalyst were calculated based on the metal content of the metal-supported catalyst obtained by ICP-OES in the same manner as in the above-mentioned BET specific surface area.

Further, a ratio (less than 5 nm/5-70 nm pore volume ratio) of the less than 5 nm pore volume ($cm^3$/g-carbon carrier) to the 5-70 nm pore volume ($cm^3$/g-carbon carrier) was calculated by dividing the less than 5 nm pore volume ($cm^3$/g-carbon carrier) by the 5-70 nm pore volume ($cm^3$/g-carbon carrier).

The total pore volume ($cm^3$/g) of the metal-supported catalyst was obtained from an adsorption amount at a point at which the relative pressure $P/P_0$ of the nitrogen adsorption isotherm at a temperature of 77 K was 0.98. Then, the average pore diameter (nm) of the metal-supported catalyst was calculated by the following equation through use of analysis software included in a specific surface area/pore distribution measuring device: average pore diameter (nm) =4×{total pore volume ($cm^3$/g) $\times 10^{21}$}/{specific surface area ($m^2$/g)$\times 10^{18}$}.

[Electrochemically Effective Specific Surface Area (ECSA)]

The electrochemically effective specific surface area (ECSA) ($m^2$/g-Pt) of platinum contained in the metal-supported catalyst was evaluated by a rotating ring-disk electrode method using a rotating ring-disk electrode apparatus (RRDE-3A Rotating Ring-disk Electrode Apparatus Ver. 1.2, manufactured by BAS Inc.) and a dual electrochemical analyzer (CHI700C, manufactured by ALS Co., Ltd.).

That is, first, a rotating ring-disk electrode apparatus of a three-electrode system including a working electrode including the metal-supported catalyst was produced. Specifically, 5 mg of the metal-supported catalyst, 50 μL of 5% NAFION (trademark) (manufactured by Sigma-Aldrich, NAFION perfluorinated ion-exchange resin, 5% solution (product number: 510211)), 400 μL of water, and 100 μL of isopropyl alcohol were mixed to prepare a slurry. Next, the slurry was subjected to ultrasonic treatment for 10 minutes, and was then subjected to homogenizer treatment for 2 minutes. Then, the resultant slurry was applied to a working electrode (ring-disk electrode for RRDE-3A, platinum ring-gold disk electrode, disk diameter: 4 mm, manufactured by BAS Inc.) so that the application amount of the metal-supported catalyst became 0.1 mg/$cm^2$, and was dried to produce a working electrode carrying the metal-supported catalyst.

A platinum electrode (Pt counter electrode of 23 cm, manufactured by BAS Inc.) was used as a counter electrode, and a reversible hydrogen electrode (RHE) (storage type reversible hydrogen electrode, manufactured by EC Frontier Co., Ltd.) was used as a reference electrode. Thus, a rotating ring-disk electrode apparatus including the working electrode including the metal-supported catalyst, the platinum electrode serving as the counter electrode, and the reversible hydrogen electrode (RHE) serving as the reference electrode was obtained. In addition, a 0.1 M aqueous solution of perchloric acid was used as an electrolytic solution.

Then, the ECSA was measured with the above-mentioned rotating ring-disk electrode apparatus. That is, cyclic voltammetry (CV) was performed in a nitrogen atmosphere with the rotating ring-disk electrode apparatus of a three-electrode system including the working electrode including the metal-supported catalyst.

In the CV, first, nitrogen bubbling was performed for 10 minutes to remove oxygen in the electrolytic solution. After that, a current density at the time when a potential was swept at a sweep rate of 10 mV/sec in the potential range of from 0.0 V (vs. NHE) to 0.94 V (vs. NHE) was recorded as a function of the potential.

An ECSA ($m^2$/g-Pt) was obtained from a cyclic voltammogram thus obtained. Specifically, the ECSA was obtained by the following equation (IV) from a hydrogen adsorption charge ($Q_{Hupd}$) (mC/$cm^2$) in the range of from 0.0 V (vs. NHE) to 0.4 V (vs. NHE) at the time of negative scanning in the cyclic voltammogram of the 3rd cycle by using an area conversion charge (210 μC/$cm^2$) and a platinum application amount ($L_{Pt}$) (mg-Pt/$cm^2$) .

$$\mathrm{ECSA} = \frac{Q_{Hupd}}{210 \times L_{Pt}} \times 10^2 \qquad (IV)$$

[Geometric Specific Surface Area: Powder X-ray Diffractometry]

The geometric specific surface area ($m^2$/g-Pt) of platinum contained in the metal-supported catalyst was measured by powder X-ray diffractometry (XRD). That is, first, a sample of a powdery metal-supported catalyst was placed in a recess (2 cm×2 cm×0.5 mm (thickness)) of a glass sample plate, and was pressed with a microscope slide. Thus, the sample was uniformly filled into the recess so that the surface of the sample and a reference surface matched each other. Next, the glass sample plate was fixed to a wide-angle X-ray diffraction sample table so that the form of the filled sample did not collapse.

Then, powder X-ray diffraction measurement was performed with an X-ray diffractometer (Rigaku RINT2100/PC, Rigaku Corporation). A voltage and a current to be applied to an X-ray tube were set to 50 kV and 300 mA, respectively. A sampling interval was set to 0.1°, a scanning speed was set to 1°/min, and a measurement angle range (2θ) was set to from 5° to 90°. CuKα was used as an incident X-ray. A sample thickness was set to 0.5 mm, and a divergence slit width β was set to 2/3°.

In the resultant XRD pattern, peak separation was performed by using a Gaussian function, as will be described later. Further, crystallite diameters corresponding to the respective peaks obtained by the peak separation were determined with Scherrer's equation. Then, the respective peaks were calculated for values of "6/density/crystallite diameter×peak area proportion×platinum atom proportion," and the values for all the peaks were added. Thus, the geometric specific surface area of platinum contained in the metal-supported catalyst was calculated.

For example, in the case of a metal-supported catalyst in which catalyst metal particles each containing platinum are supported, a (111) diffraction line of platinum appears at a position in the vicinity of a diffraction angle (2θ) of 40° (e.g., in the range of from 35° to 44°) in an XRD pattern obtained by powder X-ray diffraction using a CuKα ray. In addition, the diffraction line includes a diffraction line derived from pure platinum, a diffraction line derived from a platinum alloy, and a diffraction line derived from the carbon structure of a carbon carrier.

The diffraction line derived from pure platinum is defined as a diffraction line having a peak top at a position at which the diffraction angle (2Θ) is 39.6° or more and less than 39.8°. The diffraction line derived from a platinum alloy is defined as a diffraction line having a peak top at a position at which the diffraction angle (2Θ) is 39.9° or more and less than 43.0°. The diffraction line derived from the carbon structure of a carbon carrier is defined as a diffraction line having a peak top at a position at which the diffraction angle (2θ) is 43.3° or more and less than 43.7°.

When the metal-supported catalyst includes a plurality of platinum alloys having different compositions and/or crystal structures, a plurality of diffraction lines derived from a platinum alloy appear. The diffraction angle at which the peak top of the diffraction line derived from the platinum alloy is positioned is determined by the composition and crystal structure thereof.

For example, a diffraction line derived from a platinum-cobalt alloy represented by the composition PtxCo (X=from 1 to 20) is defined as a diffraction line having a peak top at a position at which the diffraction angle is 39.9° or more and less than 41.8°. For example, a diffraction line derived from a platinum-nickel alloy represented by the composition PtxNi (X=from 1 to 20) is defined as a diffraction line having a peak top at a position at which the diffraction angle is 39.9° or more and less than 42.0°. For example, a diffraction line derived from a platinum-nickel-manganese alloy represented by the composition $Pt_xNi_1Mn_1$ (X=from 2 to 40) is defined as a diffraction line having a peak top at a position at which the diffraction angle is 39.9° or more and less than 41.2°.

Specifically, for example, a diffraction line derived from a platinum-cobalt alloy represented by the composition PtCo is defined as a diffraction line having a peak top at a position at which the diffraction angle is 41.1° or more and less than 41.5°. In addition, a diffraction line derived from a platinum-cobalt alloy represented by the composition $Pt_3Co$ is defined as a diffraction line having a peak top at a position at which the diffraction angle is 40.1° or more and less than 40.5°. Further, a diffraction line derived from a platinum-cobalt alloy represented by the composition $Pt_7Co$ is defined as a diffraction line having a peak top at a position at which the diffraction angle is 39.9° or more and less than 40.1°.

In addition, for example, a diffraction line derived from a platinum-nickel alloy represented by the composition PtNi is defined as a diffraction line having a peak top at a position at which the diffraction angle is 41.6° or more and less than 42.0°. In addition, a diffraction line derived from a platinum-nickel alloy represented by the composition $Pt_3Ni$ is defined as a diffraction line having a peak top at a position at which the diffraction angle is 40.4° or more and less than 41.2°. In addition, a diffraction line derived from a platinum-nickel alloy represented by the composition $Pt_7Ni$ is defined as a diffraction line having a peak top at a position at which the diffraction angle is 39.9° or more and less than 40.3°. A diffraction line derived from a platinum-nickel-manganese alloy represented by the composition $Pt_6Ni_1Mn_1$ is defined as a diffraction line having a peak top at a position at which the diffraction angle is 40.1° or more and less than 40.8°.

In addition, when the metal-supported catalyst includes a plurality of kinds of platinum particles having the same composition and crystal structure and different crystallite diameters, a plurality of diffraction lines each having a peak top at substantially the same diffraction angle position and different full widths at half maximum appear.

Actually, in the XRD pattern obtained for the metal-supported catalyst, the (111) diffraction line of platinum appeared at a position at which the diffraction angle (2Θ) was in the vicinity of 40°. In view of the foregoing, first, baseline correction was performed. That is, a straight line connecting the diffraction intensity at which the diffraction angle (2Θ) was 30° and the diffraction intensity at which the diffraction angle (2θ) was 50° was determined as a baseline, and the baseline was subtracted from each intensity of the diffraction line, to thereby perform the baseline correction.

Next, the diffraction line after the baseline correction was separated into a peak derived from one or more types of pure Pt and/or a peak derived from one or more Pt alloys, and a peak derived from carbon. The separation of the diffraction line was performed by assuming that each of a plurality of peaks obtained by the separation was represented by a Gaussian function and optimizing the intensity of each of the Gaussian functions of the plurality of peaks, the diffraction angle of a peak top, and the full width at half maximum so that a residual square sum obtained by adding, for all the diffraction angles, a square of a difference (residue) from the sum of the intensity of the diffraction line and each intensity of the plurality of peaks at each diffraction angle of an XRD pattern became minimum.

Herein, with reference to an XRD pattern obtained through powder XRD measurement of the metal-supported catalyst of Example 1, peak separation of a (111) diffraction line of platinum having a peak top at a position in the vicinity of a diffraction angle ($2\theta$) of 40° (in the range of from 39° to 44°) is described.

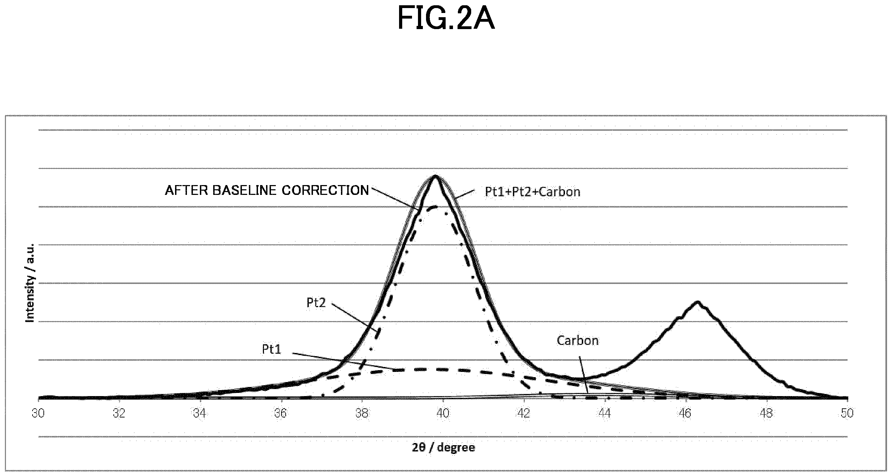

In the XRD pattern of the metal-supported catalyst of Example 1, a diffraction line having a peak top at a position in the vicinity of a diffraction angle ($2\theta$) of 40° (specifically, 39.5° or more and 40.5° or less) appeared after the baseline correction as shown in FIG. 2A. The shape of a middle portion of the diffraction line had a significantly small width compared to the shape of a lower portion thereof. Accordingly, it was conceived that, in the vicinity of a diffraction angle ($2\theta$) of 40°, at least two diffraction lines including: a diffraction line of first platinum having a relatively large full width at half maximum; and a diffraction line of second platinum having a crystallite diameter different from that of the first platinum and a full width at half maximum smaller than that of the first platinum, overlapped each other. In addition, it was conceived that the metal-supported catalyst included the carbon carrier, and hence a diffraction line derived from carbon was also included in the vicinity of a diffraction angle ($2\Theta$) of 43.5°.

In view of the foregoing, the diffraction line having a peak top at a position in the vicinity of a diffraction angle ($2\theta$) of 40° was separated into three components including a peak derived from first platinum, a peak derived from second platinum, and a peak derived from carbon by the above-mentioned peak separation method.

The results of the peak separation into the three components are shown in FIG. 2A. In FIG. 2A, a diffraction line "after baseline correction" represents a diffraction line obtained by subjecting a diffraction line obtained by XRD measurement to the baseline correction, and a peak of "Pt1", a peak of "Pt2", and a peak of "Carbon" represent a peak derived from first platinum, a peak derived from second platinum, and a peak derived from the carbon, respectively, obtained by the peak separation of the diffraction line "after baseline correction." In addition, a peak of "Pt1+Pt2+Carbon" represents a peak obtained by adding the peak of "Pt1", the peak of "Pt2", and the peak of "Carbon".

However, as shown in FIG. 2A, when the peak separation of the diffraction line after baseline correction was performed so that the spread of a tail at the diffraction angle ($2\Theta$) from the vicinity of 34° to the vicinity of 38° and the intensity of a peak top in the vicinity of 39.7° matched each other, shoulders in the vicinity of 39° and 41° could not be reproduced.

In this respect, as described above, the diffraction line derived from pure platinum has a peak top at a position of 39.6° or more and less than 39.8°. Accordingly, it was conceived that a diffraction line of third platinum having a peak top at a position in the vicinity of 39.7° was further mixed.

In view of the foregoing, the diffraction line at a diffraction angle ($2\Theta$) in the vicinity of 39.7° was separated into four components including a peak derived from first platinum, a peak derived from second platinum, a peak derived from third platinum, and a peak derived from carbon.

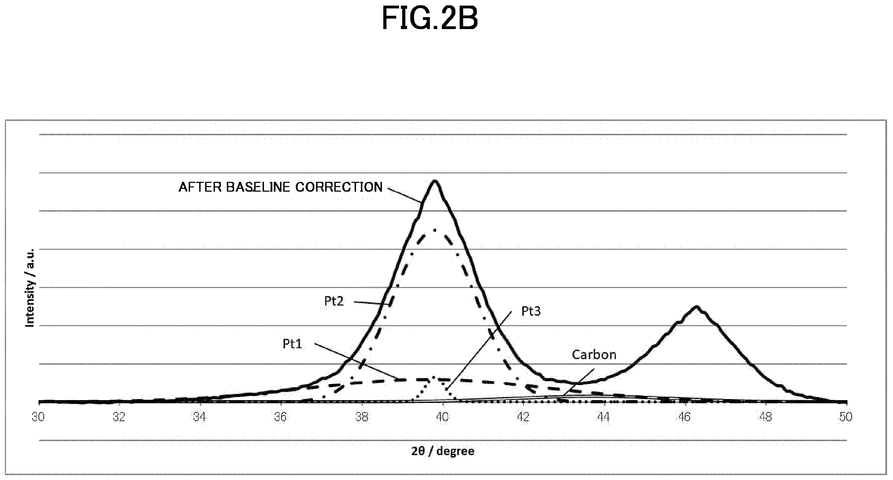

The results of the peak separation into the four components are shown in FIG. 2B. In FIG. 2B, a diffraction line "after baseline correction" represents a diffraction line obtained by subjecting a diffraction line obtained by XRD measurement to the baseline correction, and a peak of "Pt1", a peak of "Pt2", a peak of "Pt3", and a peak of "Carbon" represent a peak derived from first platinum, a peak derived from second platinum, a peak derived from third platinum, and a peak derived from carbon, respectively, obtained by the peak separation of the diffraction line "after baseline correction."

A peak obtained by adding the peak of "Pt1", the peak of "Pt2", the peak of "Pt3", and the peak of "Carbon" was substantially completely matched with the diffraction line "after baseline correction," and is hence not shown in FIG. 2B.

As described above, a residual square sum in the case of the peak separation into the four components was reduced compared to the residual square sum in the case of the peak separation into the three components, and became a significantly small value. Accordingly, it was concluded that the pure platinum particles, first platinum particles, second platinum particles, and third platinum particles were supported as the Pt particles in the metal-supported catalyst of Example 1.

In addition, the crystallite diameter of each of the first platinum particles, the second platinum particles, and the third platinum particles was calculated by the following Scherrer's equation: crystallite diameter (nm)=$K\lambda/\beta\cos\theta$. Herein, in the Scherrer's equation, K represents a Scherrer constant (0.94), $\lambda$ represents the wavelength of a CuK$\alpha$ ray (0.15418 nm), $\beta$ represents a full width at half maximum (radian), and $\theta$ represents a diffraction angle (radian).

That is, for example, the crystallite diameter of the first platinum particles was calculated by substituting the diffraction angle and full width at half maximum of the separation peak of "Pt1" in the XRD pattern shown in FIG. 2B into the above-mentioned Scherrer's equation. As a result, the crystallite diameter of the first platinum particles, the crystallite diameter of the second platinum particles, and the crystallite diameter of the third platinum particles were calculated to be $1.10\times10^{-9}$ m, $3.52\times10^{-9}$ m, and $15.3\times10^{-9}$ m, respectively.

In addition, the areas of three Pt separation peaks obtained by the above-mentioned peak separation (that is, the peak area of "Pt1", the peak area of "Pt2", and the peak area of "Pt3") were each divided by the sum of the areas of the three Pt separation peaks. Thus, a peak area proportion of each of the Pt separation peaks was calculated. As a result, the peak area proportion of the first platinum particles, the peak area proportion of the second platinum particles, and the peak area proportion of the third platinum particles were calculated to be 0.271, 0.704, and 0.025, respectively. The density of the platinum particles is $21.45 \times 10^6$ g/m$^3$, and the platinum atom proportion thereof is 1.

Then, values of "6/density/crystallite diameter×peak area proportion×platinum atom proportion" were determined for those respective peaks, and the values for all the peaks were added. Thus, the geometric specific surface area of platinum contained in the catalyst metal particles was calculated. Specifically, the geometric specific surface area of platinum contained in the catalyst metal particles supported in the metal-supported catalyst of Example 1 was calculated to be 125.4 (m$^2$/g-Pt) by the following equation: geometric specific surface area (m$^2$/g-Pt) of platinum contained in catalyst metal particles=$\{6/(21.45 \times 10^6)/(1.10 \times 10^{-9}) \times 0.271 \times 1\} + \{6/(21.45 \times 10^6)/(3.52 \times 10^{-9}) \times 0.704 \times 1\} + \{6/(21.45 \times 10^6)/(15.30 \times 10^{-9}) \times 0.025 \times 1\}$.

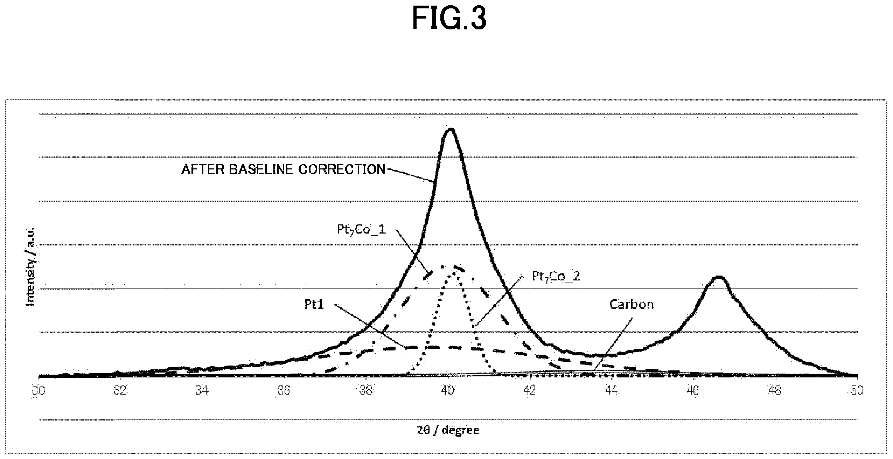

In addition, FIG. 3 is a figure showing results obtained by performing peak separation of a diffraction peak in the vicinity of a diffraction angle (2θ) of 40° (in the range of from 39° to 44°) in an XRD pattern obtained for the metal-supported catalyst of Example 9. The peak separation of Example 9 is described below.

In the XRD pattern obtained through powder XRD measurement of the metal-supported catalyst of Example 9, a diffraction line having a peak top at a position in the vicinity of a diffraction angle (2Θ) of 40.0° appeared after baseline correction. It was conceived that the diffraction line included at least a diffraction line of a platinum-cobalt alloy Pt$_7$Co. In view of the foregoing, the diffraction line was separated into two components including a peak of the platinum-cobalt alloy PtvCo and a peak derived from carbon.

However, the shape of the peak top in the vicinity of a diffraction angle (2Θ) of 40.0° could not be reproduced through optimization with the two components of the peak of the platinum-cobalt alloy PtvCo and the peak derived from carbon. Accordingly, it was conceived that, in the vicinity of a diffraction angle (2Θ) of 40.0°, a diffraction line of a first platinum-cobalt alloy PtvCo having a relatively large full width at half maximum and a diffraction line of a second platinum-cobalt alloy Pt$_7$Co having a crystallite diameter different from that of the first platinum-cobalt alloy Pt$_7$Co and a full width at half maximum smaller than that of the first platinum-cobalt alloy Pt$_7$Co were mixed. In view of the foregoing, the above-mentioned diffraction line was separated into three components including a peak of the first platinum-cobalt alloy Pt$_7$Co, a peak of the second platinum-cobalt alloy Pt$_7$Co, and the peak derived from carbon.

The intensity of the peak top in the vicinity of a diffraction angle (2Θ) of 40.0° could be reproduced through optimization with the three components, but the spread of a tail of the diffraction line in the vicinity of a diffraction angle (2Θ) of from 34° to 38° could not be reproduced. Accordingly, it was conceived that, in the vicinity of a diffraction angle (2Θ) of from 34° to 38°, a diffraction line of pure platinum was also mixed. In view of the foregoing, the diffraction line in the vicinity of a diffraction angle (2θ) of 40° was separated into four components including a peak derived from first platinum, the peak derived from the first platinum-cobalt alloy Pt$_7$Co, the peak derived from the second platinum-cobalt alloy Pt$_7$Co, and the peak derived from carbon, by the above-mentioned peak separation method.

As a result of the separation into the four components, a residual square sum was reduced, and became a significantly small value. A peak obtained by adding the peaks of those four components substantially completely matched the diffraction line "after baseline correction." Accordingly, it was concluded that platinum particles, and first platinum-cobalt alloy Pt$_7$Co particles and second platinum-cobalt alloy Pt$_7$Co particles each serving as platinum-cobalt alloy particles, were supported in the metal-supported catalyst of Example 9.

In FIG. 3, a diffraction line "after baseline correction" represents a diffraction line obtained by subjecting a diffraction line obtained by XRD measurement to the baseline correction, and a peak of "Pt1", a peak of "Pt$_7$Co_1", a peak of "Pt$_7$Co_2", and a peak of "Carbon" represent a peak derived from first platinum, a peak derived from a first platinum-cobalt alloy Pt$_7$Co, a peak derived from a second platinum-cobalt alloy Pt$_7$Co, and a peak derived from carbon, respectively, obtained by the peak separation of the diffraction line "after baseline correction."

Then, the crystallite diameters of the first platinum particles, the first platinum-cobalt alloy Pt$_7$Co particles, and the second platinum-cobalt alloy Pt$_7$Co particles were each calculated by the above-mentioned Scherrer's equation. That is, for example, the crystallite diameter of the first platinum particles was calculated by substituting the diffraction angle and full width at half maximum of the separation peak of "Pt1" in the XRD pattern shown in FIG. 3 into the above-mentioned Scherrer's equation. As a result, the crystallite diameter of the first platinum particles, the crystallite diameter of the first platinum-cobalt alloy Pt$_7$Co particles, and the crystallite diameter of the second platinum-cobalt alloy Pt$_7$Co particles were calculated to be $1.26 \times 10^{-9}$ m, $3.15 \times 10^{-9}$ m, and $9.10 \times 10^{-9}$ m, respectively.

In addition, the areas of three separation peaks obtained by the above-mentioned peak separation (that is, the peak area of "Pt1", the peak area of "Pt$_7$Co_1", and the peak area of "Pt$_7$Co_2") were each divided by the sum of the areas of the three separation peaks. Thus, a peak area proportion of each of the separation peaks was calculated. As a result, the peak area proportion of the first platinum particles, the peak area proportion of the first platinum-cobalt alloy Pt$_7$Co, and the peak area proportion of the second platinum-cobalt alloy Pt$_7$Co were calculated to be 0.340, 0.508, and 0.152, respectively. The density of the platinum particles is $21.45 \times 10^6$ g/m$^3$, the platinum atom proportion thereof is 1, the density of the platinum-cobalt alloy $Pt_7Co$ particles is $19.88\times10^6$ g/m$^3$, and the platinum atom proportion thereof is 0.875.

Then, values of "6/density/crystallite diameter×peak area proportion×platinum atom proportion" were calculated for those respective peaks, and the values for all the peaks were added. Thus, the geometric specific surface area of platinum contained in the catalyst metal particles was calculated. Specifically, the geometric specific surface area of platinum contained in the catalyst metal particles supported in the metal-supported catalyst of Example 9 was calculated to be 122.5 m$^2$/g-Pt by the following equation: geometric specific surface area (m$^2$/g-Pt) of platinum contained in catalyst metal particles=$\{6/(21.45\times10^6)/(1.26\times10^{-9})\times0.340\times1\}+\{6/(19.88\times10^6)/(3.15\times10^{-9})\times0.508\times0.875\}+\{6/(19.88\times10^6)/(9.10\times10^{-9})\times0.152\times0.875\}$.

[Carbon Anchoring Proportion]

For each of the metal-supported catalysts, a carbon anchoring proportion (%) was calculated by using the ECSA (m$^2$/g-Pt) of platinum obtained as described above and the geometric specific surface area (m$^2$/g-Pt) of platinum obtained as described above as the "electrochemically effective specific surface area" and the "geometric specific surface area" in the following equation (I), respectively. That is, the carbon anchoring proportion (%) was calculated by subtracting a value, which was obtained by dividing the ECSA (m$^2$/g-Pt) of platinum by the geometric specific surface area (m$^2$/g-Pt) of platinum, from 1, and multiplying the resultant value by 100.

Carbon anchoring proportion (%) =(1-electrochemically effective specific surface area /geometric specific surface area)×100 $\hspace{2cm}$ (I)

[Carbon Anchoring Amount]

For each of the metal-supported catalysts, a carbon anchoring amount was calculated by using the platinum content (wt%), the geometric specific surface area (m$^2$/g-Pt) of platinum, and the ECSA (m$^2$/g-Pt) of platinum each obtained as described above as the "noble metal content (wt%)," the "geometric specific surface area," and the "electrochemically effective specific surface area" in the following equation (II), respectively. That is, the carbon anchoring amount (m$^2$/g) was calculated by multiplying a value, which was obtained by dividing the platinum content (wt%) by 100, by a difference between the geometric specific surface area (m$^2$/g-Pt) of platinum and the ESCA (m$^2$/g-Pt) of platinum.

Carbon anchoring amount (m$^2$/g) ={noble metal content (wt%)/100} × (geometric specific surface area -electrochemically effective specific surface area) $\hspace{2cm}$ (II)

[Durability Index]

For each of the metal-supported catalysts, a durability index was calculated by the following equation (III) through use of the carbon anchoring proportion (%) obtained as described above and the Raman D half width at half maximum (cm$^{-1}$) obtained as described above.

Durability index (cm) =carbon anchoring proportion (%) ×(1/Raman D half width at half maximum) $\hspace{2cm}$ (III)

[Performance Evaluation of Battery including Electrode including Metal-supported Catalyst]

Performance evaluation of a fuel cell including a cathode including the metal-supported catalyst was performed. Specifically, first, a battery cathode having a catalyst layer containing a metal-supported catalyst formed thereon was produced. That is, an electrolyte (equivalent weight EW=820) in such an amount that the weight ratio thereof to a carbon carrier was 1.1 was added to 0.25 g of the metal-supported catalyst, and 2 g each of distilled water and 1-propanol were added to prepare an electrolyte solution. The electrolyte solution and 25 g of balls were loaded into a pot and mixed with a ball mill at 200 rpm for 50 minutes. Thus, a slurry-like composition for a catalyst layer containing the uniformly dispersed metal-supported catalyst was obtained.

The obtained slurry-like composition for a catalyst layer was applied onto a region having an area of 5 cm$^2$ of a gas diffusion layer ("29BC", manufactured by SGL Carbon Japan Co., Ltd.) (2.3 cm×2.3 cm) so that the content of platinum per unit area of the battery electrode became 0.2 (mg-Pt/cm$^2$), and was dried to form a catalyst layer on the gas diffusion layer. Thus, a battery electrode having the catalyst layer containing the metal-supported catalyst formed thereon was obtained.

Next, a fuel cell including the battery electrode having the catalyst layer containing the metal-supported catalyst formed thereon was produced. That is, the battery electrode including the catalyst layer (positive electrode catalyst layer) produced as described above was used as a positive electrode.

Meanwhile, a negative electrode was produced as described below. 0.5 g of Pt/C (catalyst containing platinum particles supported on a carbon carrier: UNPC40-II, manufactured by Ishifuku Metal Industry Co., Ltd.), 10 g of 5% NAFION (trademark), 2 g of distilled water, and 25 g of balls were loaded into a pot and mixed with a ball mill at 200 rpm for 50 minutes, to thereby prepare a slurry-like Pt/C composition. A negative electrode including a catalyst layer (negative electrode catalyst layer) formed of the slurry-like Pt/C composition was produced in the same manner as in the above-mentioned positive electrode except that the Pt/C composition was applied onto the gas diffusion layer (5 cm$^2$) so that the content of platinum per unit area became 0.1 (mg-Pt/cm$^2$).

Then, a polymer electrolyte membrane ("NAFION (trademark) 211", manufactured by DuPont) was arranged between the above-mentioned positive electrode catalyst layer and the above-mentioned negative electrode catalyst layer, and the resultant was subjected to pressure bonding under the conditions of 150°C and 1 MPa for 3 minutes, to thereby produce a MEA. A pair of gaskets was bonded to the MEA, and the resultant MEA was sandwiched between a pair of separators, to thereby produce a fuel cell unit cell. After that, the unit cell produced as described above was installed in a fuel cell automatic evaluation system (manufactured by Toyo Corporation). First, a power generation test was performed, and then a durability test was performed.

In the power generation test, saturated humidified air (oxygen) was supplied at 2.5 L/min to a positive electrode side of the unit cell at a back pressure of 150 kPa (relative humidity: 100%), and saturated humidified hydrogen was supplied at 1.0 L/min to a negative electrode side of the unit cell (relative humidity: 100%), a cell temperature was set to 75°C, and an open circuit voltage was measured for 5 minutes. After that, a cell current density was kept at each current density for 3 minutes from 4.0 A/cm$^2$ to 0 A/cm$^2$, and a cell voltage was measured.

Then, a voltage (mV) at a current density of 2.5 A/cm$^2$ was measured as an output characteristic. In addition, a voltage (mV) at a current density of 0.2 A/cm$^2$ was measured as catalytic activity. In addition, a voltage (mV) at a current density of 1.0 A/cm$^2$ was recorded as a voltage at the beginning of the durability test.

Next, the durability test was performed. That is, the durability test was performed as follows: the cell temperature was set to 70°C; saturated humidified nitrogen was supplied at 0.5 L/min to both sides of the unit cell at a back pressure of 35 kPa (relative humidity: 100%), and saturated humidified hydrogen was supplied at 0.5 mL/min to an anode side of the unit cell (relative humidity: 100%); and a rectangular wave cycle in which a potential was kept at 0.6 V for 10 seconds and kept at 1.2 V for 3 seconds was repeated.

After the above-mentioned rectangular wave cycle was performed 10,000 times, the power generation test was performed again. A voltage (mV) at a current density of 1.0 A/cm$^2$ after the durability test was recorded. Then, a voltage loss (mV), which was a value obtained by subtracting the voltage (mV) at 1.0 A/cm$^2$ measured in the power generation test after the durability test (voltage (mV) after 10,000 cycles) from the voltage (mV) at 1.0 A/cm$^2$ measured as initial performance in the power generation test before the durability test, was used as an indicator of durability in the durability test.

[Results]

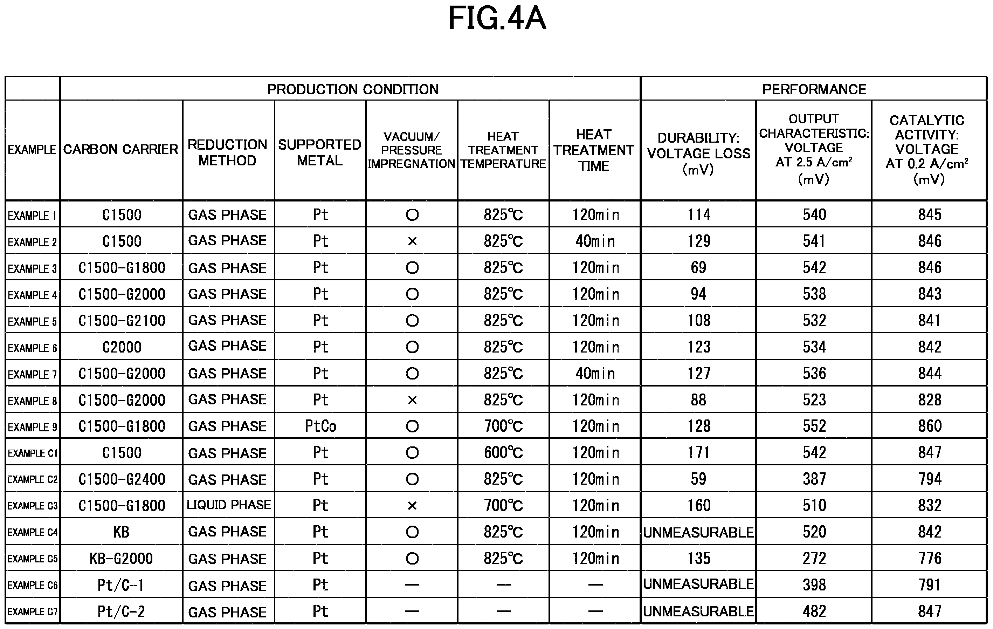

The production conditions of the metal-supported catalysts of Examples 1 to 9 and Examples C1 to C7, and the evaluation results of the characteristics of the fuel cells including the metal-supported catalysts are shown in FIG. 4A.

In the durability test, as described above, the durability test was performed at a potential of 0.6 V and 1.2 V. In an environment at a relatively high potential of about 1.2 V, the oxidative degradation of the catalyst metal particles and/or the carbon carrier is liable to proceed. Meanwhile, in an environment at a relatively low potential of about 0.6 V, when the catalyst metal particles and/or the carbon carrier, which has been oxidized once, is reduced, the degradation of the catalyst metal particles and/or the carbon carrier (e.g., aggregation and/or dissolution of the catalyst metal particles supported on the carbon carrier) is liable to proceed. Accordingly, as a voltage loss in the durability test becomes smaller, it means that the carbon carrier and the catalyst metal particles included in the metal-supported catalyst have higher durability.

In this respect, according to the voltage loss in the durability test shown in FIG. 4A, the metal-supported catalysts of Examples 1 to 9 each had durability more excellent than those of Examples C1, C3, and C5, and comparable to that of Example C2. In addition, the metal-supported catalysts of Examples 1, 3 to 5, and 8 each had durability more excellent that those of Examples 2, 6, 7, and 9, and the metal-supported catalysts of Examples 3 and 8 each had durability more excellent that those of Examples 1, 4, and 5. The metal-supported catalysts of Examples C4, C6, and C7 were significantly degraded in the durability test, and it was difficult to perform measurement.

With regard to a voltage (mV) at a current density of 2.5 A/cm$^2$, which represents the output characteristic of the metal-supported catalyst, a higher value indicates that the metal-supported catalyst has a more excellent output characteristic. That is, water is generated in a large amount in a high current density range of 2.0 A/cm$^2$ or more, and hence the inside of pores of the carbon carrier is filled with generated water, and substance transport is inhibited. As a result, the voltage serving as the performance of a battery is liable to be reduced.

In this respect, according to FIG. 4A, the metal-supported catalysts of Examples 1 to 9 each had an output characteristic more excellent than those of Examples C2, C3, and C5 to C7, and comparable to those of Example C1 and Example C4. In addition, the metal-supported catalysts of Examples 1 to 7 and 9 each had an output characteristic more excellent than that of Example 8, and the metal-supported catalyst of Example 9 had an output characteristic more excellent than those of Examples 1 to 7.

With regard to a voltage (mV) at a current density of 0.2 A/cm$^2$, which represents the catalytic activity of the metal-supported catalyst, a higher value indicates that the metal-supported catalyst has more excellent catalytic activity. That is, while the overvoltage of a fuel cell is classified into an activation overvoltage, a resistance overvoltage, and a diffusion overvoltage, the influences of the resistance overvoltage and the diffusion overvoltage are small in a low current density range of 0.2 A/cm$^2$, and hence the voltage at a current density of 0.2 A/cm$^2$ is suitable for evaluation of catalytic activity.

In this respect, according to FIG. 4A, the metal-supported catalysts of Examples 1 to 9 each had catalytic activity more excellent than those of Examples C2, C5, and C6, and comparable to those of Examples C1, C3, C4, and C7. In addition, the metal-supported catalysts of Examples 1 to 7 and 9 each had catalytic activity more excellent than that of Example 8, and the metal-supported catalyst of Example 9 had catalytic activity more excellent than those of Examples 1 to 7.

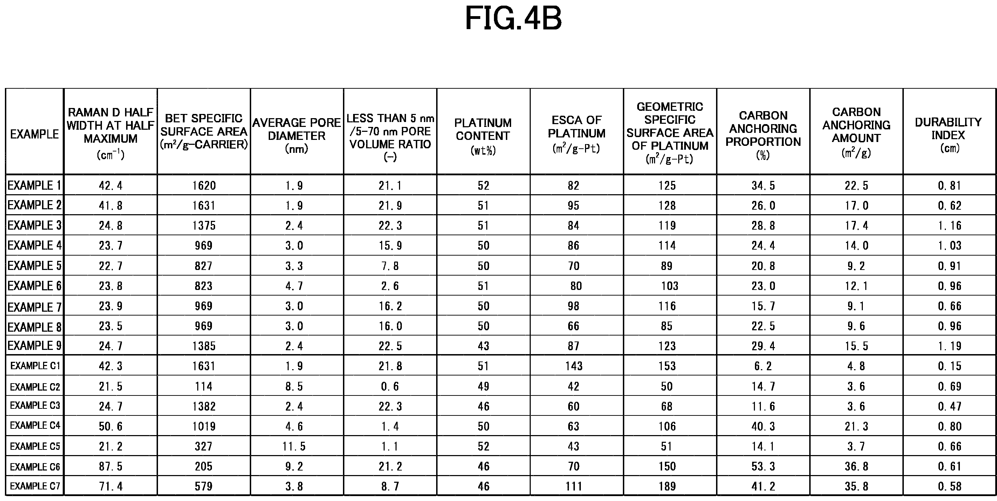

The evaluation results of the characteristics of the metal-supported catalysts of Examples are shown in FIG. 4B. With regard to a Raman D half width at half maximum, the metal-supported catalysts of Examples 1 to 9 each had a Raman D half width at half maximum larger than those of Examples C2 and C5, comparable to those of Examples C1 and C3, and smaller than those of Examples C4, C6, and C7. In addition, the metal-supported catalysts of Examples 2 to 9 each had a Raman D half width at half maximum smaller than that of Example 1, and the metal-supported catalysts of Examples 3 to 9 each had a Raman D half width at half maximum smaller than that of Example 2.

With regard to a BET specific surface area, the metal-supported catalysts of Examples 1 to 9 each had a BET specific surface area larger than those of Examples C2 and C5 to C7, comparable to those of Examples C3 and C4, and smaller than that of Example C1. In addition, the metal-supported catalysts of Examples 1 to 4 and 7 to 9 each had a BET specific surface area larger than those of Examples 5 and 6, and the metal-supported catalysts of Examples 1 to 3 and 9 each had a BET specific surface area larger than those of Examples 4, 7, and 8.

With regard to an average pore diameter, the metal-supported catalysts of Examples 1 to 9 each had an average pore diameter comparable to those of Examples C1, C3, C4, and C7, and smaller than those of Examples C2, C5, and C6. In addition, the metal-supported catalysts of Examples 1 to 5 and 7 to 9 each had an average pore diameter smaller than that of Example 6, and the metal-supported catalysts of Examples 1 to 3 and 9 each had an average pore diameter smaller than those of Examples 4, 5, 7, and 9.

With regard to a less than 5 nm/5-70 nm pore volume ratio, the metal-supported catalysts of Examples 1 to 9 each had a less than 5 nm/5-70 nm pore volume ratio higher than those of Examples C2, C4, and C5, and comparable to those of Examples C1, C3, C6, and C7. In addition, the metal-supported catalysts of Examples 1 to 5 and 7 to 9 each had a less than 5 nm/5-70 nm pore volume ratio higher than that of Example 6, the metal-supported catalysts of Examples 1 to 4 and 7 to 9 each had a less than 5 nm/5-70 nm pore volume ratio higher than that of Example 5, and the metal-supported catalysts of Examples 1 to 3 and 9 each had a less than 5 nm/5-70 nm pore volume ratio higher than those of Examples 4, 7, and 8.

With regard to a platinum content, the metal-supported catalysts of Examples 1 to 9 each had a platinum content comparable to those of Examples C1 to C7. In addition, the metal-supported catalysts of Examples 1 to 8 each had a platinum content higher than that of Example 9.

With regard to the ECSA of platinum, the metal-supported catalysts of Examples 1 to 9 each had an ECSA of platinum larger than those of Examples C2 to C5, comparable to that of Example C8, and smaller than those of Examples C1 and C7. In addition, the metal-supported catalysts of Examples 1 to 4, 6, 7, and 9 each had an ECSA larger than those of Examples 5 and 8, and the metal-supported catalysts of Examples 2 to 4, 7, and 9 each had an ECSA larger than those of Examples 1 and 6.

With regard to the geometric specific surface area of platinum, the metal-supported catalysts of Examples 1 to 9 each had a geometric specific surface area of platinum larger than those of Examples C2, C3, and C5, comparable to that of Example C4, and smaller than those of Examples C1, C6, and C7. In addition, the metal-supported catalysts of Examples 1 to 4, 6, 7, and 9 each had a geometric specific surface area of platinum larger than those of Examples 5 and 8, and the metal-supported catalysts of Examples 1 to 4, 7, and 9 each had a geometric specific surface area of platinum larger than that of Example 6.

With regard to a carbon anchoring proportion, the metal-supported catalysts of Examples 1 to 9 each had a carbon anchoring proportion higher than those of Examples C1 to C3 and C5, and lower than those of Examples C4, C6, and C7. In addition, the metal-supported catalysts of Examples 1 to 6, 8, and 9 each had a carbon anchoring proportion higher than that of Example 7, and the metal-supported catalysts of Examples 1, 3, and 9 each had a carbon anchoring proportion higher than those of Examples 2, 4, 5, and 8. In addition, the metal-supported catalysts of Examples 3 and 9 each had a carbon anchoring proportion lower than that of Example 1.

With regard to a carbon anchoring amount, the metal-supported catalysts of Examples 1 to 9 each had a carbon anchoring amount larger than those of Examples C1 to C3 and C5, comparable to that of Example C4, and smaller than those of Examples C6 and C7. In addition, the metal-supported catalysts of Examples 1 to 4, 6, and 9 each had a carbon anchoring amount larger than those of Examples 5, 7, and 8, and the metal-supported catalysts of Examples 1 to 3 and 9 each had a carbon anchoring amount larger than those of Examples 4 and 6. In addition, the metal-supported catalysts of Examples 2, 3, and 9 each had a carbon anchoring amount lower than that of Example 1.

With regard to a durability index, the metal-supported catalysts of Examples 1 to 9 each had a durability index higher than those of Examples C1, C3, C6, and C7, and comparable to those of Examples C2, C4, and C5. In addition, the metal-supported catalysts of Examples 1, 3 to 6, 8, and 9 each had a durability index higher than those of Examples 2 and 7, the metal-supported catalysts of Examples 3 to 6, 8, and 9 each had a durability index higher than that of Example 1, and the metal-supported catalysts of Examples 3 and 9 each had a durability index higher than those of Examples 4 to 6 and 8.

**Claims**

1. A metal-supported catalyst, comprising:

   a carbon carrier; and
   catalyst metal particles supported on the carbon carrier, the particles each containing a noble metal,
   wherein the metal-supported catalyst has a half width at half maximum of a D band having a peak top in a vicinity of a Raman shift of 1,340 $cm^{-1}$ of 50.0 $cm^{-1}$ or less in a Raman spectrum obtained by Raman spectroscopy, and
   wherein the metal-supported catalyst has a carbon anchoring proportion calculated by the following equation (I) of 15.0% or more:

   Carbon anchoring proportion (%) =(1-electrochemically effective specific surface area /geometric specific surface area) $\times$100     (I)

   in the equation (I), the "electrochemically effective specific surface area" and the "geometric specific surface area" are an electrochemically effective specific surface area ($m^2$/g-noble metal) and a geometric specific surface area ($m^2$/g-noble metal) of the noble metal contained in the metal-supported catalyst, respectively.

2. The metal-supported catalyst according to claim 1, wherein the metal-supported catalyst has an average pore diameter of 8.0 nm or less.

3. The metal-supported catalyst according to claim 1 or 2, wherein the metal-supported catalyst has a ratio of a volume ($cm^3$/g-carbon carrier) of pores each having a pore diameter of less than 5 nm to a volume ($cm^3$/g-carbon carrier) of pores each having a pore diameter of 5 nm or more and 70 nm or less of 1.5 or more.

4. The metal-supported catalyst according to any one of claims 1 to 3, wherein the metal-supported catalyst has a BET specific surface area of 350 ($m^2$/g-carbon carrier) or more.

5. The metal-supported catalyst according to any one of claims 1 to 4, wherein a proportion of a weight of the noble metal to a weight of the metal-supported catalyst is 30 wt% or more.

6. The metal-supported catalyst according to any one of claims 1 to 5, wherein the metal-supported catalyst has the electrochemically effective specific surface area of the noble metal contained in the metal-supported catalyst of 45 ($m^2$/g-noble metal) or more.

7. The metal-supported catalyst according to any one of claims 1 to 6, wherein the metal-supported catalyst has the geometric specific surface area of the noble metal contained in the metal-supported catalyst of 52 ($m^2$/g-noble metal) or more.

8. The metal-supported catalyst according to any one of claims 1 to 7, wherein the metal-supported catalyst has a carbon anchoring amount calculated by the following equation (II) of 5.0 $m^2$/g or more:

   Carbon anchoring amount ($m^2$/g) ={noble metal content (wt%)/100} $\times$ (geometric specific surface area -electrochemically effective specific surface area)     (II)

   in the equation (II), the "noble metal content (wt%)" is a proportion of a weight of the noble metal to a weight of the metal-supported catalyst, and the "geometric specific surface area" and the "electrochemically effective specific surface area" are a geometric specific surface area ($m^2$/g-noble metal) and an electrochemically effective specific

surface area (m$^2$/g-noble metal) of the noble metal contained in the metal-supported catalyst, respectively.

9. The metal-supported catalyst according to any one of claims 1 to 8, wherein the metal-supported catalyst has a durability index calculated by the following equation (III) of 0.50 cm or more:

Durability index (cm) =carbon anchoring proportion (%) $\times$ (1/Raman D half width at half maximum)     (III)

in the equation (III), the "carbon anchoring proportion (%) " is calculated by the equation (I), and the "Raman D half width at half maximum" is the half width at half maximum (cm$^{-1}$) of the D band.

10. An electrode, comprising the metal-supported catalyst of any one of claims 1 to 9.

11. A battery, comprising the electrode of claim 10.

# FIG.1

# FIG.2A

EP 4 487 948 A1

FIG.2B

EP 4 487 948 A1

FIG.3

# FIG.4A

| EXAMPLE | PRODUCTION CONDITION | | | | | | PERFORMANCE | | |
|---|---|---|---|---|---|---|---|---|---|
| | CARBON CARRIER | REDUCTION METHOD | SUPPORTED METAL | VACUUM/ PRESSURE IMPREGNATION | HEAT TREATMENT TEMPERATURE | HEAT TREATMENT TIME | DURABILITY: VOLTAGE LOSS (mV) | OUTPUT CHARACTERISTIC: VOLTAGE AT 2.5 A/cm² (mV) | CATALYTIC ACTIVITY: VOLTAGE AT 0.2 A/cm² (mV) |
| EXAMPLE 1 | C1500 | GAS PHASE | Pt | ○ | 825°C | 120min | 114 | 540 | 845 |
| EXAMPLE 2 | C1500 | GAS PHASE | Pt | × | 825°C | 40min | 129 | 541 | 846 |
| EXAMPLE 3 | C1500-G1800 | GAS PHASE | Pt | ○ | 825°C | 120min | 69 | 542 | 846 |
| EXAMPLE 4 | C1500-G2000 | GAS PHASE | Pt | ○ | 825°C | 120min | 94 | 538 | 843 |
| EXAMPLE 5 | C1500-G2100 | GAS PHASE | Pt | ○ | 825°C | 120min | 108 | 532 | 841 |
| EXAMPLE 6 | C2000 | GAS PHASE | Pt | ○ | 825°C | 120min | 123 | 534 | 842 |
| EXAMPLE 7 | C1500-G2000 | GAS PHASE | Pt | ○ | 825°C | 40min | 127 | 536 | 844 |
| EXAMPLE 8 | C1500-G2000 | GAS PHASE | Pt | × | 825°C | 120min | 88 | 523 | 828 |
| EXAMPLE 9 | C1500-G1800 | GAS PHASE | PtCo | ○ | 700°C | 120min | 128 | 552 | 860 |
| EXAMPLE C1 | C1500 | GAS PHASE | Pt | ○ | 600°C | 120min | 171 | 542 | 847 |
| EXAMPLE C2 | C1500-G2400 | GAS PHASE | Pt | ○ | 825°C | 120min | 59 | 387 | 794 |
| EXAMPLE C3 | C1500-G1800 | LIQUID PHASE | Pt | × | 700°C | 120min | 160 | 510 | 832 |
| EXAMPLE C4 | KB | GAS PHASE | Pt | ○ | 825°C | 120min | UNMEASURABLE | 520 | 842 |
| EXAMPLE C5 | KB-G2000 | GAS PHASE | Pt | ○ | 825°C | 120min | 135 | 272 | 776 |
| EXAMPLE C6 | Pt/C-1 | GAS PHASE | Pt | — | — | — | UNMEASURABLE | 398 | 791 |
| EXAMPLE C7 | Pt/C-2 | GAS PHASE | Pt | — | — | — | UNMEASURABLE | 482 | 847 |

EP 4 487 948 A1

# FIG.4B

| EXAMPLE | RAMAN D HALF WIDTH AT HALF MAXIMUM (cm$^{-1}$) | BET SPECIFIC SURFACE AREA (m$^2$/g-CARRIER) | AVERAGE PORE DIAMETER (nm) | LESS THAN 5 nm /5-70 nm PORE VOLUME RATIO (−) | PLATINUM CONTENT (wt%) | ESCA OF PLATINUM (m$^2$/g-Pt) | GEOMETRIC SPECIFIC SURFACE AREA OF PLATINUM (m$^2$/g-Pt) | CARBON ANCHORING PROPORTION (%) | CARBON ANCHORING AMOUNT (m$^2$/g) | DURABILITY INDEX (cm) |
|---|---|---|---|---|---|---|---|---|---|---|
| EXAMPLE 1 | 42.4 | 1620 | 1.9 | 21.1 | 52 | 82 | 125 | 34.5 | 22.5 | 0.81 |
| EXAMPLE 2 | 41.8 | 1631 | 1.9 | 21.9 | 51 | 95 | 128 | 26.0 | 17.0 | 0.62 |
| EXAMPLE 3 | 24.8 | 1375 | 2.4 | 22.3 | 51 | 84 | 119 | 28.8 | 17.4 | 1.16 |
| EXAMPLE 4 | 23.7 | 969 | 3.0 | 15.9 | 50 | 86 | 114 | 24.4 | 14.0 | 1.03 |
| EXAMPLE 5 | 22.7 | 827 | 3.3 | 7.8 | 50 | 70 | 89 | 20.8 | 9.2 | 0.91 |
| EXAMPLE 6 | 23.8 | 823 | 4.7 | 2.6 | 51 | 80 | 103 | 23.0 | 12.1 | 0.96 |
| EXAMPLE 7 | 23.9 | 969 | 3.0 | 16.2 | 50 | 98 | 116 | 15.7 | 9.1 | 0.66 |
| EXAMPLE 8 | 23.5 | 969 | 3.0 | 16.0 | 50 | 66 | 85 | 22.5 | 9.6 | 0.96 |
| EXAMPLE 9 | 24.7 | 1385 | 2.4 | 22.5 | 43 | 87 | 123 | 29.4 | 15.5 | 1.19 |
| EXAMPLE C1 | 42.3 | 1631 | 1.9 | 21.8 | 51 | 143 | 153 | 6.2 | 4.8 | 0.15 |
| EXAMPLE C2 | 21.5 | 114 | 8.5 | 0.6 | 49 | 42 | 50 | 14.7 | 3.6 | 0.69 |
| EXAMPLE C3 | 24.7 | 1382 | 2.4 | 22.3 | 46 | 60 | 68 | 11.6 | 3.6 | 0.47 |
| EXAMPLE C4 | 50.6 | 1019 | 4.6 | 1.4 | 50 | 63 | 106 | 40.3 | 21.3 | 0.80 |
| EXAMPLE C5 | 21.2 | 327 | 11.5 | 1.1 | 52 | 43 | 51 | 14.1 | 3.7 | 0.66 |
| EXAMPLE C6 | 87.5 | 205 | 9.2 | 21.2 | 46 | 70 | 150 | 53.3 | 36.8 | 0.61 |
| EXAMPLE C7 | 71.4 | 579 | 3.8 | 8.7 | 46 | 111 | 189 | 41.2 | 35.8 | 0.58 |

# EP 4 487 948 A1

| INTERNATIONAL SEARCH REPORT | International application No. |
|---|---|
| | PCT/JP2022/023285 |

### A. CLASSIFICATION OF SUBJECT MATTER

*B01J 23/42*(2006.01)i; *B01J 23/89*(2006.01)i; *H01M 4/92*(2006.01)i; *H01M 4/96*(2006.01)i; *H01M 8/10*(2016.01)i
FI: B01J23/42 M; B01J23/89 M; H01M4/92; H01M4/96 M; H01M8/10 101

According to International Patent Classification (IPC) or to both national classification and IPC

### B. FIELDS SEARCHED

Minimum documentation searched (classification system followed by classification symbols)

B01J21/00-38/74; H01M4/92-4/96; H01M8/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2021-023872 A (NISSHINBO HOLDINGS INCORPORATED) 22 February 2021 (2021-02-22)<br>examples C5, C7, paragraphs [0208], [0210], [0247]-[0248], fig. 5, 6A, 6C | 1, 4-5, 9-11 |
| X | YANG, X. et al. International Journal of Hydrogen Energy. 01 June 2012, vol. 37, pages 11167-11175, DOI:10.1016/j.ijhydene.2012.04.153<br>abstract, page 11167, left column, first paragraph, page 11168, left column, first paragraph to right column, second paragraph, page 11168, right column, fourth paragraph to page 11169, left column, first paragraph, page 11172, right column, third paragraph to page 11174, left column, first paragraph, page 11174, left column, fifth paragraph to right column, first paragraph, fig. 2, 5, tables 1-2 | 1, 5-11 |
| A | TESFU-ZERU, T. et al. Applied Catalysis B: Environmental. 09 November 2016, vol. 204, pages 173-184, DOI:10.1016/j.apcatb.2016.11.014<br>entire text, all drawings | 1-11 |
| A | WO 2019/068110 A1 (PRESIDENT AND FELLOWS OF HARVARD COLLEGE) 04 April 2019 (2019-04-04)<br>entire text, all drawings | 1-11 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 August 2022 | 16 August 2022 |

| Name and mailing address of the ISA/JP | Authorized officer |
|---|---|
| Japan Patent Office (ISA/JP)<br>3-4-3 Kasumigaseki, Chiyoda-ku, Tokyo 100-8915<br>Japan | |
| | Telephone No. |

Form PCT/ISA/210 (second sheet) (January 2015)

31

**INTERNATIONAL SEARCH REPORT**

International application No.

**PCT/JP2022/023285**

| C. | DOCUMENTS CONSIDERED TO BE RELEVANT | |
|---|---|---|
| Category* | Citation of document, with indication, where appropriate, of the relevant passages | Relevant to claim No. |
| A | JP 2006-228502 A (MITSUI CHEMICALS, INCORPORATED) 31 August 2006 (2006-08-31)<br>    entire text, all drawings | 1-11 |
| A | JP 2007-179963 A (KASATANI KABUSHIKI KAISHA) 12 July 2007 (2007-07-12)<br>    entire text, all drawings | 1-11 |
| A | US 2011/0014550 A1 (NANYANG TECHNOLOGICAL UNIVERSITY) 20 January 2011 (2011-01-20)<br>    entire text, all drawings | 1-11 |
| A | JP 2015-138780 A (SAMSUNG SDI COMPANY, LIMITED) 30 July 2015 (2015-07-30)<br>    entire text, all drawings | 1-11 |
| P, X | WO 2022/054485 A1 (NISSHINBO HOLDINGS INCORPORATED) 17 March 2022 (2022-03-17)<br>    examples, paragraphs [0007]-[0017], [0096]-[0125], fig. 1, 7 | 1-11 |
| P, X | WO 2022/054486 A1 (NISSHINBO HOLDINGS INCORPORATED) 17 March 2022 (2022-03-17)<br>    examples, paragraphs [0007]-[0017], [0096]-[0125], fig. 1, 7 | 1-11 |

Form PCT/ISA/210 (second sheet) (January 2015)

**INTERNATIONAL SEARCH REPORT**
Information on patent family members

International application No.

**PCT/JP2022/023285**

| Patent document cited in search report | | | Publication date (day/month/year) | Patent family member(s) | | | Publication date (day/month/year) |
|---|---|---|---|---|---|---|---|
| JP | 2021-023872 | A | 22 February 2021 | WO | 2021/024656 | A1 | |
| WO | 2019/068110 | A1 | 04 April 2019 | JP | 2020-535954 | A | |
| | | | | US | 2020/0254432 | A1 | |
| | | | | EP | 3687681 | A1 | |
| | | | | CN | 111447995 | A | |
| JP | 2006-228502 | A | 31 August 2006 | (Family: none) | | | |
| JP | 2007-179963 | A | 12 July 2007 | (Family: none) | | | |
| US | 2011/0014550 | A1 | 20 January 2011 | WO | 2009/078815 | A1 | |
| JP | 2015-138780 | A | 30 July 2015 | US | 2015/0207152 | A1 | |
| | | | | EP | 2899785 | A1 | |
| | | | | KR | 10-2015-0088006 | A | |
| | | | | CN | 104810527 | A | |
| WO | 2022/054485 | A1 | 17 March 2022 | JP | 2022-152111 | A | |
| WO | 2022/054486 | A1 | 17 March 2022 | JP | 2022-152112 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008207072 A
- WO 2014175099 A1
- JP 2020136109 A

**Non-patent literature cited in the description**

- **A. SADEZKY et al.** *Carbon*, 2005, vol. 43, 1731-1742